# EUROPÄISCHE PATENTSCHRIFT

(11) **EP 4 017 815 B1**
(45) Veröffentlichungstag und Bekanntmachung des Hinweises auf die Patenterteilung: **01.01.2025**
(21) Anmeldenummer: 20780899.9
(22) Anmeldetag: 21.08.2020
(51) Int. Cl.: B65G 1/137

(54) **TRANSPORT- UND MANIPULATIONSSYSTEM UND VERFAHREN ZUM TRANSPORT VON LADUNGSTRÄGERN**
TRANSPORT AND MANIPULATION SYSTEM AND METHOD FOR TRANSPORTING LOAD CARRIERS
SYSTÈME DE TRANSPORT ET DE MANIPULATION ET PROCÉDÉ DE TRANSPORT DE SUPPORTS DE CHARGEMENT

(30) Priorität: 22.08.2019 AT 507312019
(43) Veröffentlichungstag der Anmeldung: 29.06.2022
(73) Patentinhaber: TGW Logistics Group GmbH, 4614 Marchtrenk (AT)
(72) Erfinder: WINKLER, Markus, 4814 Altmünster (AT); BEINHOFER, Maximilian, 4600 Thalheim bei Wels (AT)
(74) Vertreter: Burger, Hannes
(86) Internationale Anmeldenummer: PCT/AT2020/060315
(87) Internationale Veröffentlichungsnummer: WO 2021/030852

(56) Entgegenhaltungen:
- EP-B1- 3 180 274
- EP-B1- 3 180 275
- DE-A1- 102016 110 820
- US-A1- 2018 053 141

## Beschreibung

Die Erfindung betrifft ein Transport- und Manipulationssystem und ein Verfahren zum Transport von Ladungsträgern und zur Durchführung von manuellen Bearbeitungsaufträgen.

Die EP 3 180 274 B1 und EP 3 180 275 B1 offenbaren ein solches Transport- und Manipulationssystem und ein solches Verfahren zum Transport von Ladungsträgern und zur Durchführung von manuellen Bearbeitungsaufträgen gemäß dem Oberbegriff der Ansprüche 1 und 16.

Gemäß der Erfindung umfassen solche Bearbeitungsaufträge jedoch keine Kommissionieraufträge. Demnach handelt es sich um zu Kommissionieraufträgen verschiedene Aufträge, so genannte Bearbeitungsaufträge. So kann sich ein Bearbeitungsauftrag an einen Kommissionierauftrag anschließen, sobald zu diesem Kommissionierauftrag eine oder mehrere Auftragszeilen kommissioniert wurden.

Selbst in hochautomatisierten Intralogistiksystemen wird es Arbeitsbereiche geben, wo durch eine Bedienperson Aufträge manuell bearbeitet werden. Die manuelle Bearbeitung eines Auftrages erfolgt an einem Arbeitsplatz, an welchem der Bedienperson die zu manipulierende Ware und erforderliche Arbeitsmittel zur Verfügung stehen. Die Bearbeitungsaufträge umfassen beispielweise Mehrwertdienste (Value Added Services) und werden nach dem Abarbeiten eines Kommissionierauftrags durchgeführt. Die Bearbeitungsaufträge sind also zu den Kommissionieraufträgen verschieden und bestehen nicht darin, Waren zu Kundenstellungen zusammenzustellen. Beispielweise umfasst ein Bearbeitungsauftrag das Anbringen einer Geschenkverpackung. In einer solchen Anwendung, sind an einem Arbeitsplatz die Auftragswaren (Waren, welche zu einem Kommissionierauftrag zusammengestellt wurden) und das Verpackungsmaterial (Arbeitsmittel) bereitzustellen. Der Bearbeitungsauftrag ist üblicherweise mit hohem Aufwand verbunden und die Bearbeitung ist entsprechend zeitintensiv. Dem entgegen können üblicherweise die Waren am Arbeitsplatz sehr rasch bereitgestellt werden. Die besondere Herausforderung besteht nun darin, die hohe Durchsatzleistung eines hochautomatisiertes Intralogistiksystems an die deutlich geringere Leistungsanforderung an einem (manuellen) Arbeitsplatz anzupassen.

Es sind verschiedene Transportsysteme bekannt, welche die Arbeitsplätze mit manueller Durchführung von Bearbeitungsaufträgen und ein vollautomatisches Warenlager, beispielweise ein Shuttlelager, verbinden.

Das Transportsystem kann nach einer ersten Ausführung ein stationäres Fördersystem umfassen. Zwar sind solche stationären Fördersysteme sehr leistungsfähig, jedoch auch sehr unflexibel. Eine Rekonfiguration des stationären Fördersystems ist mit enorm hohem Aufwand verbunden. Zudem sind die stationären Fördersysteme im Vergleich zur Bearbeitungsleistung "überdimensioniert". Die Bedienperson ist nicht in der Lage die Bearbeitungsaufträge entsprechend der Transportleistung des stationären Fördersystems abzuarbeiten.

Das Transportsystem kann nach einer zweiten Ausführung ein mobiles Fördersystem mit autonomen Transportfahrzeugen umfassen.

Die autonomen Transportfahrzeuge verteilen die hohe Durchsatzleistung des vollautomatischen Warenlagers auf die Fläche eines Aktionsraumes, in welchem statische Arbeitsplätze zur manuellen Durchführung von Bearbeitungsaufträgen angeordnet sind und die autonomen Transportfahrzeuge bewegt werden. Die deutlich geringere Transportleistung eines einzelnen autonomen Transportfahrzeugs lässt sich durch eine entsprechende Anzahl gleichzeitig operierender Transportfahrzeuge ausgleichen. Vor allem reicht die Transportleistung jedes einzelnen Transportfahrzeugs aus, einen Arbeitsplatz zu bedienen.

Beispielsweise zeigt die DE 10 2015 114 393 A1 ein Lager- und Kommissioniersystem mit Manipulatoren und autonom verfahrbaren Transportfahrzeugen. Das Kommissioniersystem arbeitet grundsätzlich nach dem Mann-zur-Ware-Prinzip. Die Transportaufträge für die Transportfahrzeuge werden derart erzeugt, dass jeder der Manipulatoren während einer Durchführung seines Aktionsauftrags seine Transferaktionen unterbrechungsfrei ausführen kann.

Aus der DE 10 2016 110 820 A1 ist eine Rendezvous-Kommissionierung mit autonomen Transportfahrzeugen bekannt, wobei von einer Steuerungseinrichtung, das zeitlich und örtlich synchronisierte Zusammentreffen (= Rendezvous) einer Kommissionierperson, einer kundenauftragsspezifischen Anzahl an Quell-Ladungsträger (Quellbehälter) und einer kundenauftragsspezifischen Anzahl an Ziel-Ladungsträger (Zielbehälter) an einem variablen Kommissionierplatz koordiniert.

Aus der WO 2018/064639 A1 ist ein Kommissioniersystem bekannt, bei welchem autonome Transportfahrzeuge Waren zwischen einem ersten Lagerbereich, zweiten Lagerbereich und Kommissionierarbeitsplätzen bewegen.

Aus der US 2014/100998 A1 ist ein Kommissioniersystem bekannt, bei welchem autonome Transportfahrzeuge Ladungsträger aus einem Lagerbereich zu Kommissionierarbeitsplätzen und Versandbehälter von den Kommissionierarbeitsplätzen zu einer Versandstation transportieren.

Die WO 2018/168060 A1, US 2018/211347 A1 und US 2016/229631 A1 offenbaren Kommissioniersysteme, bei welchen Ladungsträger mittels autonomen Transportfahrzeugen zu Kommissionierarbeitsplätzen und/oder von diesen weg transportiert werden.

Der US 2013/275045 A1 und JP 2018/163415 A sind ebenfalls Transportsysteme zu entnehmen, bei welchen Ladungsträger mittels Transportfahrzeuge zu Arbeitsplätzen gebracht werden.

Der US 2018/053141 A1 und US 2017/144307 A1 sind Transportsysteme zu entnehmen, bei welchen autonome Transportfahrzeuge und Personen im Wesentlichen Seite an Seite agieren. Die Transportfahrzeuge reduzieren hierbei deren Fahrgeschwindigkeit bereichsweise, wenn Personen den entsprechenden Bereich betreten. Die entsprechenden Bereiche werden hierfür insbesondere dynamisch zugewiesen.

Die Aufgabe der Erfindung besteht also darin, ein Transport- und Manipulationssystem und ein Verfahren zum Transport von Ladungsträgern und zur Durchführung von manuellen Bearbeitungsaufträgen an Arbeitsplätzen zu schaffen, welches einen optimierten Transport von Ladungsträgern zu / von den Arbeitsplätzen ermöglicht und den Personen selbst bei automatisiertem Transport der Ladungsträger durch autonome Transportfahrzeuge eine sichere Arbeitsumgebung bietet.

Die Aufgabe der Erfindung wird gelöst durch ein Transport- und Manipulationssystem gemäß Anspruch 1.

Der Fahrbereich weist einen ersten Fahrabschnitt und einen zweiten Fahrabschnitt auf, wobei der erste Fahrabschnitt in den zumindest einen Arbeitsbereich hineinragt. Im ersten Fahrabschnitt ist für die Transportfahrzeuge eine erste maximale Fahrgeschwindigkeit festgelegt, insbesondere eine personensichere maximale erste Fahrgeschwindigkeit, und im zweiten Fahrabschnitt ist für die Transportfahrzeuge eine zweite maximale Fahrgeschwindigkeit festgelegt, wobei die zweite maximale Fahrgeschwindigkeit höher ist als die erste maximale Fahrgeschwindigkeit. Gegebenenfalls kann die zweite maximale Fahrgeschwindigkeit höher sein als eine Bauartgeschwindigkeit von den Transportfahrzeugen oder von zumindest einem Transportfahrzeug der Transportfahrzeuge. Somit kann eine Transportleistung der Transportfahrzeuge effizient ausgenützt und/oder das Transport- und Manipulationssystem gegebenenfalls mit schnelleren Transportfahrzeugen ausgestattet oder auf solche umgerüstet werden. Der zweite Fahrabschnitt ist gegenüber dem ersten Fahrabschnitt durch eine Abgrenzung abgegrenzt, welche von den Transportfahrzeugen (nur) an zumindest einer vorbestimmten Passierzone passiert werden kann.

Vorzugsweise wird die erste maximale Fahrgeschwindigkeit und/oder die zweite maximale Fahrgeschwindigkeit von einem übergeordneten Leitsystem, insbesondere einem Lager-Verwaltungssystem oder einem Flotten-Managementsystem, festgelegt. Die Steuerungseinheit des jeweiligen Transportfahrzeuges regelt die Fahrgeschwindigkeit, sodass die vorgegebenen maximalen Fahrgeschwindigkeiten eingehalten werden. Hierfür kann die erste maximale Fahrgeschwindigkeit und/oder die zweite maximale Fahrgeschwindigkeit vom Leitsystem an die Steuerungseinheit der Transportfahrzeuge übermittelt werden. Die erste maximale Fahrgeschwindigkeit und/oder die zweite maximale Fahrgeschwindigkeit kann, insbesondere als Parameter, in der Fahrwegvorgabe hinterlegt sein. Der Parameter kann insbesondere als Variable definiert werden.

Es ist gemäß der Erfindung vorgesehen, dass die Transportfahrzeuge an zumindest einer vorbestimmten Passierzone zwischen dem ersten Fahrabschnitt und zweiten Fahrabschnitt wechseln können. Die Passierzone kann bei der Planung und Installation des Aktionsraums festgelegt werden und ist somit im Wesentlichen örtlich fixiert. Die Passierzone ist in vorteilhafter Weise so angeordnet, dass die Transportfahrzeuge möglichst lange mit der zweiten maximalen Fahrgeschwindigkeit bewegt werden können, sodass eine Start- und/oder Zielposition des jeweiligen Transportauftrags möglichst schnell erreicht werden kann.

Es ist vorgesehen, dass die Arbeitsplätze in einer statischen Konfiguration angeordnet sind, um die durchzuführenden Bearbeitungsaufträge bestmöglich erfüllen zu können. "Statisch" bedeutet in diesem Zusammenhang, dass sich während des Betriebs des Transport- und Manipulationssystems die Position der Arbeitsplätze nicht verändert. Dies schließt jedoch nicht aus, dass die Arbeitsplätzen nachträglich in einer geänderten Konfiguration positioniert werden können. Die Positionen der Arbeitsplätze im Arbeitsbereich werden grundsätzlich aber bei der Planung und Installation des Aktionsraums festgelegt. Die Änderung der Positionen der Arbeitsplätze (Arbeitsplätze-Layout) bedarf jedenfalls einer Neukonfiguration. Beispielweise kann es von Vorteil sein, wenn bestimmte Arbeitsplätze benachbart aufgestellt werden, wenn sich die Art der Bearbeitungsaufträge an den Arbeitsplätzen ändert.

Es sei auch hingewiesen, dass ein Arbeitsplatz nicht auf einen einzigen Bearbeitungsschritt beschränkt eingesetzt werden kann, sondern an diesem unterschiedliche Bearbeitungsaufträge ausgeführt werden können. Dies vor allem deswegen, weil die autonomen Transportfahrzeuge üblicherweise nicht darauf eingeschränkt sind, einen einzigen Typ von Ware oder Arbeitsmittel zu transportieren.

Bevorzugt bekommt das Transportfahrzeug die Fahrwegvorgabe auf drahtlosem Wege vom Lager-Verwaltungssystem (WMS) oder von einem Flotten-Managementsystem (Fleet Management System - FMS). Gemäß der bevorzugten Ausführung ist es nicht vorgesehen, dass das Transportfahrzeug die Fahrwegvorgabe eigenständig ermittelt, beispielweise durch die eigene Steuerungseinheit.

Beim erfindungsgemäßen Transport- und Manipulationssystem operieren im Aktionsraum automatische Transportfahrzeuge und Personen, insbesondere wenn sich die Transportfahrzeuge den Arbeitsplätzen nähern. Es muss jedenfalls sichergestellt sein, dass es durch die Transportfahrzeuge zu keiner Personengefährdung kommen kann. Sicherheitsrichtlinien definieren eine maximale Fahrgeschwindigkeit, mit welcher die Transportfahrzeuge bewegt werden können, wenn sich im Aktionsraum Personen befinden. Die Fahrgeschwindigkeit ist derart festgelegt, dass ein Transportfahrzeug vor einer plötzlich im Fahrweg auftauchenden Person (oder allgemein einem Hindernis) anhalten kann. Diese "Sicherheitsgeschwindigkeit" ist meist geringer als die maximale Geschwindigkeit, die das Transportfahrzeug fahren könnte - wodurch Transportkapazität "vergeudet" wird.

Um dennoch eine hohe Transportleistung zu erreichen, ist es vorgesehen, den Fahrbereich durch eine Abgrenzung in einen ersten Fahrabschnitt und einen zweiten Fahrabschnitt aufzuteilen. Im ersten Fahrabschnitt werden die Transportfahrzeuge mit "reduzierter" Fahrgeschwindigkeit bewegt, da sich im Nahbereich des ersten Fahrabschnitts oder im ersten Fahrabschnitt sich regelmäßig auch Personen bewegen oder aufhalten. Hingegen können im zweiten Fahrabschnitt die Transportfahrzeuge mit "erhöhter" Fahrgeschwindigkeit bewegt werden, da sich im zweiten Fahrabschnitt nur gelegentlich Personen bewegen oder aufhalten. Im zweiten Fahrabschnitt können die Transportfahrzeuge verkehrsabhängig sogar mit maximaler Fahrgeschwindigkeit bewegt werden. Diese Geschwindigkeit kann so hoch, dass ein sicheres Anhalten vor einem plötzlich auftauchenden Hindernis, beispielweise einer in den Fahrweg tretenden Person nicht mehr gewährleistet werden kann und somit eine Verletzung der Person möglich wäre. Die Personen können im Normalbetrieb auch nicht ohne Weiteres den ersten Fahrabschnitt verlassen und sich in den zweiten Fahrabschnitt bewegen. Hierzu ist die Abgrenzung zwischen dem ersten Fahrabschnitt und zweiten Fahrabschnitt vorhanden. Die Abgrenzung dient als Personen-Zutrittsschutz.

Erfindungsgemäß umfasst der Personen-Zutrittsschutz eine Überwachungsvorrichtung, die dazu ausgebildet ist, einen Zutritt der Person in den zweiten Fahrabschnitt durch Passieren des Personen-Zutrittsschutz zu erkennen. Es kann sich dabei von Vorteil erweisen, wenn ein Warnsignal generiert wird. Das Warnsignal kann ein optisches/akustisches Warnsignal umfassen, um einer Person den unbefugten Zutritt in den zweiten Fahrabschnitt zu signalisieren. Das Warnsignal kann alternativ oder zusätzlich aber auch ein Steuersignal umfassen, mit welchem die Transportfahrzeuge im zweiten Fahrabschnitt derart angesteuert werden, dass diese in einen Sicherheitsmodus umgeschaltet werden, beispielsweise werden die Transportfahrzeuge im zweiten Fahrabschnitt gestoppt oder die Fahrgeschwindigkeit zumindest auf die erste maximale Fahrgeschwindigkeit verlangsamt.

Das erfindungsgemäße Transport- und Manipulationssystem erfüllt nicht nur die sicherheitstechnischen Vorschriften, sondern kann besonders flexibel auf sich ändernde Anforderungen reagieren. Ändert sich an einem Arbeitsplatz die Art eines Bearbeitungsauftrags (beispielweise anstatt dem Verpacken der Warensendungen sollen Beipackzettel zu den Warensendungen beigelegt werden) können die Arbeitsmittel ohne großem Aufwand durch die Transportfahrzeuge bereitgestellt werden. Eine Änderung des Arbeitsplatz-Layouts ist hierfür nicht erforderlich.

Die Transportfahrzeuge ermöglichen gegebenenfalls auch einen leistungsangepassten Transport von Waren / Ladungsträgern abhängig von den zu erfüllenden Bearbeitungsaufträgen. In diesem Fall können auch das dem Transport- und Manipulationssystem vorgelagerte stationäre Ladungsträger-Fördersystem und Warenlager "leistungsangepasst" betrieben werden.

Nach einer Weiterbildung ist vorgesehen, dass die Übernahmestation und/oder die Übergabestation der Andienungsvorrichtung über ein Ladungsträger-Fördersystem mit zumindest einem aus der Gruppe von Warenlager zur Lagerung von Waren in den Ladungsträgern, Kommissioniersystem mit einem oder mehreren Kommissionierarbeitsplätzen, Wareneingang oder Warenausgang (fördertechnisch) verbunden ist.

Das Ladungsträger-Fördersystem ist ein stationäres Ladungsträger-Fördersystem. Üblicherweise ist an dem Ladungsträger-Fördersystem auch ein Wareneingang, Warenausgang und Kommissioniersystem mit einem oder mehreren Kommissionierarbeitsplätzen zur automatischen / manuellen Durchführung von Kommissionieraufträgen angeschlossen, wobei an den Kommissionierarbeitsplätzen Kommissionieraufträge (nicht jedoch Bearbeitungsaufträge) bearbeitet werden.

Das Ladungsträger-Fördersystem umfasst Fördervorrichtungen zum Transport von Ladegütern, wie Rollenförderer, Gurtförderer, Riemenumsetzer und dgl., und/oder Hebevorrichtungen zum Transport von Ladungsträgern, wie Vertikallifte, Paternoster und dgl.. Das Ladungsträger-Fördersystem kann aber auch eine Hängefördervorrichtung umfassen. Auch ist eine Kombination aus Fördervorrichtung, Hebevorrichtung und/oder Hängefördervorrichtung möglich.

Der Ladungsträger ist beispielweise ein Behälter, Karton, Tablar oder Hängetasche. Auch ist eine Kombination aus Behälter, Karton, Tablar oder Hängetasche möglich.

Die hohe Transportleistung des Ladungsträger-Fördersystems (Hochleistungs-Fördersystem) wird auf eine Vielzahl von autonomen Transportfahrzeugen aufgeteilt, die ihrerseits Ladungsträger auf eine Vielzahl von Arbeitsplätzen zur Durchführung manueller Bearbeitungsaufträge (nicht jedoch Kommissionieraufträge) verteilen.

Das automatisiert betriebene Ladungsträger-Fördersystem verbindet ein automatisiert betriebenes Warenlager und die Andienungsvorrichtung, um zumindest einige der Ladungsträger zwischen dem Warenlager und der Andienungsvorrichtung zu transportieren. Die Andienungsvorrichtung bildet die Übergabe- und Übernahmeschnittstelle zum automatisiert betriebenen Ladungsträger-Fördersystem. Das Ladungsträger-Fördersystem und/oder das automatisiert betriebene (vollautomatische) Warenlager kann gegebenenfalls auch unterhalb der maximalen Transportleistung / Durchsatzleistung betrieben werden, da die Leistungsanforderung an den Arbeitsplätzen zur Durchführung manueller Bearbeitungsaufträge weniger hoch ist.

Die Übernahmestation und Übergabestation können voneinander getrennt vorgesehen werden. Andererseits können die Übernahmestation und Übergabestation auch kombiniert und durch eine einzige Übernahme- und Übergabestation gebildet werden.

Die autonomen Transportfahrzeuge verbinden das Ladungsträger-Fördersystem und die Arbeitsplätze zur manuellen Durchführung von Bearbeitungsaufträgen (nicht jedoch von Kommissionieraufträgen). Die hohe Transportleistung des Ladungsträger-Fördersystems (Hochleistungs-Fördersystem) wird auf eine Vielzahl von autonomen Transportfahrzeugen aufgeteilt, die ihrerseits Ladungsträger auf eine Vielzahl von Arbeitsplätzen zur Durchführung manueller Bearbeitungsaufträge (nicht jedoch Kommissionieraufträge) verteilen. Wie oben beschrieben, ermöglichen die Transportfahrzeuge auch einen leistungsangepassten Transport von Waren / Ladungsträgern abhängig von den zu erfüllenden Bearbeitungsaufträgen.

Die autonomen Transportfahrzeuge können aber auch die Arbeitsplätze zur manuellen Durchführung von Bearbeitungsaufträgen (nicht jedoch von Kommissionieraufträge) und den Wareneingang / Warenausgang verbinden.

Grundsätzlich können die autonomen Transportfahrzeuge aber auch die Arbeitsplätze zur manuellen Durchführung von Bearbeitungsaufträgen (nicht jedoch von Kommissionieraufträge) und die Kommissionierarbeitsplätze zur automatischen / manuellen Durchführung von Kommissionieraufträgen (nicht jedoch von Bearbeitungsaufträgen) verbinden, wenn diese nicht durch stationäre Fördervorrichtungen an das Ladungsträger-Fördersystem angeschlossen sind.

Eine Weiterbildung besteht ferner darin, dass sich der Fahrbereich und der Arbeitsbereich teilweise überlappen. Es kann im Aktionsraum nahe den Arbeitsplätzen der Fahrbereich abschnittsweise auch als Arbeitsbereich dienen. Dort können sich Personen und Transportfahrzeuge gleichzeitig aufhalten. Für die Ermittlung der Fahrwegvorgaben ist es aber prinzipiell von Vorteil, wenn der mögliche Bewegungsspielraum für die Transportfahrzeuge möglichst wenig beschränkt ist, da sich dadurch wegoptimierte Fahrwegvorgaben ermitteln lassen.

Eine Weiterbildung besteht darin, dass der Fahrbereich durch eine Barriere oder durch das Vorhandensein von Navigationsmarken festgelegt ist. Zur Eigen- und Fremdsicherheit haben Transportfahrzeuge Mittel, um einen Kontakt mit einem Objekt und/oder eine Annäherung an ein Objekt im Fahrweg zu erkennen und das Objekt dann zu umfahren oder davor anzuhalten. Der für ein Transportfahrzeug zulässige Fahrbereich könnte nach dieser Weiterbildung daher sehr einfach durch bauliche Mittel festgelegt werden. Es ist aber auch möglich, dass der Fahrbereich durch Navigationsmarken bestimmt wird. Beispielsweise kann das Transportfahrzeug durch das Vorhandensein bzw. nicht Vorhandensein solcher Marken den Bereich ermitteln, in dem es sich bewegen darf. Diese Ausbildung hat insbesondere den Vorteil, dass sich mehrere abgeschlossene Fahrbereiche nebeneinander realisieren lassen, wobei gewährleistet ist, dass die Transportfahrzeuge stets im eigenen Fahrbereich bleiben.

Eine vorteilhafte Weiterbildung besteht auch darin, dass im Fahrbereich eine Mehrzahl von Navigationsmarken angeordnet ist, insbesondere am Boden des Fahrbereichs. Durch diese Weiterbildung hat ein Transportfahrzeug zumeist eine Navigationsmarke verfügbar, insbesondere unabhängig von der Belegung des Fahrbereichs durch andere Transportfahrzeuge und Personen. Bevorzugt sind die Navigationsmarken in einem regelmäßigen Raster am Boden angeordnet, wobei der Rasterabstand größer gleich der längsten Außenabmessung des Transportfahrzeugs ist. Die längste Außenabmessung parallel zum Boden, zuzüglich eines Sicherheitsabstandes entspricht der minimalen Weite einer Fahrgasse. Bevorzugt sind die Navigationsmarken kontaktlos, insbesondere optisch auslesbar, und können gemäß möglicher Ausführungen durch 1D und/oder 2D-Codes gebildet sein (Barcode, QR-Code, Data Matrix Code, etc.). Von Vorteil ist auch, dass ein in Bewegung befindliches Transportfahrzeug wiederkehrend eine Navigationsmarke erfassen kann und somit eine genaue Navigation innerhalb des Fahrbereichs und vor allem eine genaue Einhaltung des Fahrwegs möglich ist.

Nach einer Weiterbildung ist vorgesehen, dass die Navigationsmarken durch bauliche Merkmale innerhalb eines das Transport- und Manipulationssystem umgebenden Raums gebildet ist. Diese Weiterbildung hat den Vorteil, dass keine zusätzlichen Marken angebracht werden müssen und bestehende Merkmale des Raumes zur Navigation verwendet werden können. Beispielsweise können konstruktive Elemente des Raumes (Säulen, Türen, Tore, Fenster, etc.), aber auch die Arbeitsplätze als Navigationsmarken dienen. Es sei erwähnt, dass sich konstruktive Elemente des Raums auch innerhalb einer äußeren Begrenzung befinden können. Beispielsweise wird eine größere Halle aus statischen Gründen auch im Innenraum Säulen aufweisen, die auch unter diese Weiterbildung fallen. Vorteilhaft ist ferner, wenn Navigationsmarken beispielsweise durch Elemente der Deckenkonstruktion gebildet sind, beispielweise Träger oder an der Deckenkonstruktion angeordnete Elemente, wie Beleuchtungsmittel, Lichtkuppeln usw.. Da jedes Transportfahrzeug zumeist eine sehr gute Sicht nach oben hat, lassen sich Elemente im Deckenbereich gut erfassen und somit als Wegmarken verwenden. Vorzugsweise werden Elemente nach der gegenständlichen Weiterbildung derart gewählt, dass diese beim bestimmungsgemäßen Betrieb der Transportfahrzeuge regelmäßig erfasst werden, damit die Transportfahrzeuge die autonome Navigation bewerkstelligen können.

Eine Weiterbildung besteht darin, dass die Steuerungseinheit ein Speichermittel aufweist, in welchem eine Karte der Navigationsmarken hinterlegt ist. Während des autonomen Fahrbetriebs kann es vorkommen, dass die nächste abzufahrende Navigationsmarke nicht erfassbar ist, beispielweise weil sie verschmutzt, beschädigt oder kurzzeitig durch ein Hindernis (eine Person oder ein anderes Transportfahrzeug) verdeckt ist, oder die herrschende Lichtsituation ein Erfassen nicht zulassen.

Ist dies der Fall, kann das Transportfahrzeug sofort versuchen alternative Navigationsmarken zu erfassen. Beispielsweise könnte das Transportfahrzeug die aktuelle Fahrtrichtung solange beibehalten bis wieder eine Navigationsmarke erfasst werden kann. Durch Kenntnis aller Navigationsmarken kann das Transportfahrzeug dann einen Korrekturpfad zur Fahrwegvorgabe ermitteln und diesen autonom abfahren. Es sei erwähnt, dass jede Navigationsmarke an sich nur eine Position eindeutig identifiziert, insbesondere lediglich die eigene Position. Wo sich diese Position im Arbeitsbereich und welche andere Navigationsmarke sich wo in der unmittelbaren Umgebung befinde, wird durch die hinterlegte Karte festgelegt. Bei einem Vergleich mit Schach entspricht die Navigationsmarke einer Feldangabe, beispielweise H7, das Schachbrett entspricht der Karte. Nach einer weiteren möglichen Ausführung wäre es auch möglich, dass das Transportfahrzeug dann seine aktuelle Position an das übergeordnete Flotten-Managementsystem (FMS) zurückmeldet und eine neue Fahrwegvorgabe anfordert bzw. erhält.

Im Nachfolgenden werden Ausführungsmöglichkeiten beschrieben, wie eine Karte erstellt werden kann.

Nach einer ersten Ausführung kann die Karte vorab bei der Planung des Aktionsraums am CAD (Computer Aided Design) erstellt und an jedes Transportfahrzeug an die betreffende Steuerungseinheit übertragen werden. Der Vorteil dieser Variante liegt darin, dass jedes Transportfahrzeug sofort bei Inbetriebnahme eine vollständige Karte des gesamten Aktionsraums zur Verfügung hat.

Nach einer zweiten Ausführung werden die Transportfahrzeuge losgeschickt, um ihre Umgebung selbsttätig zu erfassen und dabei die Karte zu erstellen. Der Vorteil dieser Variante liegt darin, dass im Vorfeld keinerlei Konfigurationsarbeiten erforderlich sind und jedes Transportfahrzeug immer eine aktuelle Karte zur Verfügung hat. Ergeben sich während des Betriebs des Transport- und Manipulationssystems Abweichungen in der Konfiguration des Arbeitsbereichs, beispielweise weil ein zusätzlicher Arbeitsbereich eingerichtet wurde, können die sich bewegenden Transportfahrzeuge diese Änderung erfassen und die hinterlegte Karte aktualisieren. Es kann dabei auch vorgesehen sein, dass die Transportfahrzeuge mittels einer so genannten "Schwarmintelligenz" miteinander kommunizieren und Kartendaten austauschen. Somit muss nicht jedes Transportfahrzeug den gesamten Aktionsraum abfahren und es können alle Transportfahrzeuge gemeinsam sehr rasch die gesamte Karte aufbauen bzw. aktualisieren.

Die Steuerungseinheit ist insbesondere durch eine Betriebssteuerung des Transportfahrzeugs gebildet, welche den bestimmungsgemäßen Fahrbetrieb des Transportfahrzeugs gewährleistet.

Von Vorteil ist, wenn die Steuerungseinheit ein Speichermittel aufweist, in welchem eine Karte des Fahrbereichs und/oder des zumindest einen Arbeitsbereichs hinterlegt ist. Bei der Bewegung der Transportfahrzeuge in Bereichen, wo sich auch Personen aufhalten können, kann es immer wieder zu einer kurzfristigen Staubildung kommen. Meist betrifft dies jedoch sehr kleinräumige Bereiche, da bei der Ermittlung der Fahrwegvorgabe versucht wird, solche Verdichtungen zu verhindern. Die Transportfahrzeuge sind zur autonomen Navigation ausgebildet und können solchen lokalen Behinderungen ausweichen. Dazu ist es von Vorteil, wenn die Transportfahrzeuge Kenntnis über die Anordnung, Größe und Grenzen des Fahrbereichs und/oder den zumindest einen Arbeitsbereich haben. Somit können die Transportfahrzeuge mithelfen, lokale Behinderungen aufzulösen bzw. zumindest nicht anwachsen zu lassen, indem lokal alternative (Ausweich)Routen geplant werden. Nach einer weiteren möglichen Ausführung könnten Transportfahrzeuge durch Kommunikationsmittel der Steuerungseinheit Daten austauschen, um als "Schwarmintelligenz" lokale Behinderungen schnellstmöglich aufzulösen und die Transportkapazität wiederherzustellen, ohne dass das übergeordnete Flotten-Managementsystem (FMS) neue Fahrwegvorgaben erstellen müsste.

Nach einer Weiterbildung ist auch vorgesehen, dass der statische Arbeitsplatz einen Arbeitstisch, eine Stellplatzfläche zur Pufferung zumindest eines Quell-Ladungsträgers, eine Stellplatzfläche zur Pufferung zumindest eines Ziel-Ladungsträgers und eine Benutzerschnittstelle mit einer Ausgabevorrichtung und einer Eingabevorrichtung aufweist und dass durch die Ausgabevorrichtung die Person angewiesen wird, gemäß dem Bearbeitungsauftrag einen Bearbeitungsschritt an der Ware vorzunehmen, welche aus dem Quell-Ladungsträger entnommenen wird, und dass durch die Eingabevorrichtung die Person angewiesen wird, einen Bearbeitungsschritt zu bestätigen, insbesondere den Abschluss eines Bearbeitungsschritts oder die Abgabe einer Ware nach dem Bearbeitungsschritt in einen Ziel-Ladungsträger und dgl..

Diese Weiterbildung ist insbesondere im Hinblick auf einen optimierten Arbeitsablauf bei der Durchführung des Bearbeitungsauftrags von Vorteil, da die Waren / Ladungsträger von den Transportfahrzeugen an vordefinierten Stellplatzflächen antransportiert, bereitgestellt und/oder abtransportiert werden. Die Definition von Stellplatzflächen hat ferner den Vorteil, dass der Arbeitsbereich für die Person durch Antransport, Bereitstellung und/oder Abtransport der Ware / Ladungsträger nicht eingeschränkt wird. Die Benutzerschnittstelle ist über eine Verbindungsleitung mit dem Lager-Verwaltungssystem (WMS) verbunden. Die Benutzerschnittstelle empfängt vom Lager-Verwaltungssystem (WMS) den durchzuführenden Bearbeitungsauftrag und gibt an der Ausgabevorrichtung entsprechende Instruktionen an den Bediener. Die Ausgabevorrichtung umfasst beispielweise einen Bildschirm, Lautsprecher und dgl.. Die Benutzerschnittstelle übermittelt an das Lager-Verwaltungssystem (WMS) Bestätigungssignale zu einem Bearbeitungsauftrag, welcher gerade durchgeführt wird oder gerade abgeschlossen wurde. Der Bediener bestätigt beispielweise den Abschluss des Bearbeitungsauftrags oder scannt zu einem Bearbeitungsvorgang die Ware, indem an der Eingabevorrichtung ein Bestätigungssignal abgesetzt oder ein Bestätigungssignal erfasst wird. Die Eingabevorrichtung umfasst beispielweise eine Tastatur, Scanner und dgl.. Das Bestätigungssignal löst zumeist einen nächsten Prozessschritt aus.

Der statische Arbeitsplatz umfasst die Stellplatzfläche zur Pufferung zumindest eines Quell-Ladungsträgers und die Stellplatzfläche zur Pufferung zumindest eines Ziel-Ladungsträgers.

Nach einer ersten Ausführung sind die Stellplatzfläche zur Pufferung zumindest eines Quell-Ladungsträgers und die Stellplatzfläche zur Pufferung zumindest eines Ziel-Ladungsträgers jeweils auf dem Arbeitstisch ausgebildet.

Hierzu kann einerseits das Transportfahrzeug eine Umsetzvorrichtung, beispielweise eine Fördervorrichtung, umfassen, durch welche die Ware / der Ladungsträger auf die Stellplatzfläche abgegeben oder von der Stellplatzfläche aufgenommen wird, nachdem das Transportfahrzeug neben dem Arbeitstisch positioniert wurde.

Hierzu kann andererseits der Stellplatzfläche zur Pufferung zumindest eines Quell-Ladungsträgers eine oder mehrere Umsetzvorrichtung(en) zugeordnet werden, zu welcher das Transportfahrzeug bewegt wird und an welcher durch die Umsetzvorrichtung(en) der zumindest eine Quell-Ladungsträger vom Transportfahrzeug auf die Stellplatzfläche transportiert wird. Ebenso kann der Stellplatzfläche zur Pufferung zumindest eines Ziel-Ladungsträgers eine oder mehrere Umsetzvorrichtung(en) zugeordnet werden, zu welcher das Transportfahrzeug bewegt und an welcher durch die Umsetzvorrichtung(en) der zumindest eine Ziel-Ladungsträger von der Stellplatzfläche auf das Transportfahrzeug transportiert wird.

Nach einer zweiten Ausführung sind die Stellplatzfläche zur Pufferung zumindest eines Quell-Ladungsträgers auf einer Anliefervorrichtung und die Stellplatzfläche zur Pufferung zumindest eines Ziel-Ladungsträgers auf einer Abliefervorrichtung ausgebildet. Einerseits kann ein Transportfahrzeug an der Anliefervorrichtung positioniert und an dieser der zumindest eine Quell-Ladungsträger durch eine oder mehrere Umsetzvorrichtung(en) vom Transportfahrzeug auf die Stellplatzfläche transportiert werden. Andererseits kann ein Transportfahrzeug an der Abliefervorrichtung positioniert und an dieser der zumindest eine Ziel-Ladungsträger durch eine oder mehrere Umsetzvorrichtung(en) von der Stellplatzfläche auf das Transportfahrzeug transportiert werden. Nach dieser Ausführung sind die Stellplatzflächen also nicht am Arbeitstisch, sondern an der Anliefervorrichtung und Abliefervorrichtung vorgesehen.

Die Anliefervorrichtung und Abliefervorrichtung sind als kombinierte Anliefer- und Abliefervorrichtung oder voneinander getrennt als Anliefervorrichtung und Abliefervorrichtung gestaltet. Auch ist ein Wechselbetrieb der Anliefervorrichtung und Abliefervorrichtung denkbar, wenn diese im Wesentlichen baugleich gestaltet sind. Gleiches gilt für die Umsetzvorrichtung(en).

Nach einer dritten Ausführung ist es aber auch möglich, dass ein erstes Transportfahrzeug die Stellplatzfläche zur Pufferung zumindest eines Quell-Ladungsträgers und/oder ein zweites Transportfahrzeug eine Stellplatzfläche zur Pufferung zumindest eines Ziel-Ladungsträgers umfassen. Das erste Transportfahrzeug und/oder zweite Transportfahrzeug bilden in diesem Fall einen Teil des statischen Arbeitsplatzes und verbleiben während der Bearbeitung zumindest eines Bearbeitungsauftrags an dem statischen Arbeitsplatz. Die Bereitstellung des Quell-Ladungsträgers und/oder Ziel-Ladungsträgers erfolgt demnach durch das erste Transportfahrzeug und/oder zweite Transportfahrzeug.

Nach einer Weiterbildung ist vorgesehen, dass der statische Arbeitsplatz einen Bereitstellplatz oder mehrere Bereitstellplätze für Arbeitsmittel aufweist, auf welchem oder welchen, insbesondere in einem initialen Konfigurationsschritt, Arbeitsmittel bereitgestellt werden.

Das Arbeitsmittel wird vorzugsweise mit einem Arbeitsmittel-Ladungsträger transportiert, wenngleich dies nicht zwingend ist. Der Bereitstellplatz kann auch als Bereitstellplatz für einen Arbeitsmittel-Ladungsträger verstanden werden. Arbeitsmittel sind beispielweise bestimmte Werkzeuge und Hilfsmaterialien, wie Verpackungsmaterialien, und dgl..

Nach einer ersten Ausführung ist der Bereitstellplatz für Arbeitsmittel auf dem Arbeitstisch ausgebildet.

Hierzu kann einerseits das Transportfahrzeug eine Umsetzvorrichtung, beispielweise eine Fördervorrichtung, umfassen, durch welche der (benötigte) Arbeitsmittel-Ladungsträger auf den Bereitstellplatz abgegeben oder der (nicht mehr benötigte) Arbeitsmittel-Ladungsträger von dem Bereitstellplatz aufgenommen wird, nachdem das Transportfahrzeug neben dem Arbeitstisch positioniert wurde.

Hierzu kann andererseits dem Bereitstellplatz für Arbeitsmittel eine oder mehrere Umsetzvorrichtung(en) zugeordnet werden, zu welcher das Transportfahrzeug bewegt wird und an welcher durch die Umsetzvorrichtung(en) der zumindest eine (benötigte) Arbeitsmittel-Ladungsträger vom Transportfahrzeug auf den Bereitstellplatz transportiert wird. Ebenso kann dem Bereitstellplatz für Arbeitsmittel eine oder mehrere Umsetzvorrichtung(en) zugeordnet werden, zu welcher das Transportfahrzeug bewegt und an welcher durch die Umsetzvorrichtung(en) der zumindest eine (nicht mehr benötigte) Arbeitsmittel-Ladungsträger von dem Bereitstellplatz auf das Transportfahrzeug transportiert wird.

Nach einer zweiten Ausführung ist der Bereitstellplatz für einen (benötigten) Arbeitsmittel-Ladungsträger auf einer Anliefervorrichtung und der Bereitstellplatz für einen (nicht mehr benötigten) Arbeitsmittel-Ladungsträger auf einer Abliefervorrichtung ausgebildet. Einerseits kann ein Transportfahrzeug an der Anliefervorrichtung positioniert und an dieser der zumindest eine (benötigte) Arbeitsmittel-Ladungsträger durch eine oder mehrere Umsetzvorrichtung(en) vom Transportfahrzeug auf den Bereitstellplatz transportiert werden. Andererseits kann ein Transportfahrzeug an der Abliefervorrichtung positioniert und an dieser der zumindest eine (nicht mehr benötigte) Arbeitsmittel-Ladungsträger durch eine oder mehrere Umsetzvorrichtung(en) von dem Bereitstellplatz auf das Transportfahrzeug transportiert werden. Nach dieser Ausführung ist der Bereitstellplatz / sind die Bereitstellplätze also nicht am Arbeitstisch, sondern an der Anliefervorrichtung und Abliefervorrichtung vorgesehen.

Die Anliefervorrichtung und Abliefervorrichtung sind als kombinierte Anliefer- und Abliefervorrichtung oder voneinander getrennt als Anliefervorrichtung und Abliefervorrichtung gestaltet. Auch ist ein Wechselbetrieb der Anliefervorrichtung und Abliefervorrichtung denkbar, wenn diese im Wesentlichen baugleich gestaltet sind. Gleiches gilt für die Umsetzvorrichtung(en).

Nach einer dritten Ausführung ist es aber auch möglich, dass das Transportfahrzeug den Bereitstellplatz für Arbeitsmittel umfasst. Das Transportfahrzeug bildet in diesem Fall einen Teil des statischen Arbeitsplatzes und verbleibt während der Bearbeitung zumindest eines Bearbeitungsauftrags an dem statischen Arbeitsplatz. Die Bereitstellung des (benötigten) Arbeitsmittel-Ladungsträgers am Arbeitsplatz erfolgt demnach durch das Transportfahrzeug.

Auch wenn in den oben beschriebenen Ausführungen der Arbeitsmittel-Ladungsträger durch ein autonomes Transportfahrzeug zum Arbeitsplatz antransportiert und vom Arbeitsplatz abtransportiert wird, wäre es grundsätzlich auch denkbar, dass der Arbeitsmittel-Ladungsträger durch eine stationäre Fördervorrichtung zum Arbeitsplatz antransportiert und vom Arbeitsplatz abtransportiert wird.

Es ist auch von Vorteil, wenn erst durch einen bzw. beim Konfigurationsschritt die Art der an diesem Arbeitsplatz durchführbaren Bearbeitungsaufträge festgelegt wird. Der Arbeitsplatz ist grundsätzlich nicht auf eine spezifische Tätigkeit festgelegt. Dementsprechend ist eine einfache Neukonfiguration auf einen anderen Typ von Bearbeitungsauftrag durchführbar, beispielweise um auf saisonale Auftragsarten reagieren zu können.

An den Arbeitsplätzen können verschiedene Bearbeitungsaufträge abgewickelt werden, welche verschiedene Arbeitsmittel (Betriebsmittel) benötigen. Beispielweise werden an einem Arbeitsplatz Retouren abgewickelt, an einem anderen Arbeitsplatz Warensendungen mit Geschenkpapier verpackt.

Es erweist sich auch von Vorteil, wenn die Steuerungseinheit (einiger) der Transportfahrzeuge ferner dazu ausgebildet ist, Transportaufträge von dem Lager-Verwaltungssystem zu empfangen und auszuwerten, und wobei die Transportfahrzeuge gemäß diesen Transportaufträgen automatisch und autonom angesteuert werden, indem zu einem dritten Transportauftrag der Transportaufträge ein Arbeitsmittel-Ladungsträger zu genanntem Arbeitsplatz antransportiert oder von genanntem Arbeitsplatz abtransportiert wird. Nach dieser Weiterbildung werden die zur Durchführung der Bearbeitungsaufträge den Arbeitsplätzen benötigen Arbeitsmittel von den Transportfahrzeugen zu den Arbeitsplätzen antransportiert und nach Beendigung eines Typs der Bearbeitungsaufträge von den Arbeitsplätzen wieder abtransportiert. Auch ist es vorgesehen, dass im laufenden Betrieb aufgebrauchte Arbeitsmittel nachgebracht werden. Es kann auch vorgesehen sein, dass auf einen sich ändernden Bearbeitungsauftrag oder aus Kapazitätsgründen das Arbeitsmittel ergänzt und/oder ausgetauscht wird.

Eine Weiterbildung besteht auch darin, dass der Arbeitsplatz ortsvariabel ausgebildet ist. Unter "ortsvariabel" wird verstanden, dass bei einer Änderung eines Typs der Bearbeitungsaufträge die Arbeitsplätze gemäß einer geänderten Konfiguration an anderen Positionen angeordnet werden. Damit können auch Prozessabläufe an die geänderten Bearbeitungsaufträge angepasst werden. Die Arbeitsplätze sind jedoch nicht dahingehend mobil, dass diese beispielweise vom Bediener frei bewegbar sind. Die Arbeitsplätze sind grundsätzlich fixiert bzw. feststehend, sodass sie für die Dauer der gewählten Konfiguration zuverlässig in Position gehalten wird. Eine Umkonfiguration der Position der Arbeitsplätze erfordert eine Stillsetzung des umzukonfigurierenden Arbeitsbereichs.

Nach einer weiteren Ausbildung ist vorgesehen, dass in jeder Navigationsmarke eine eindeutige Identifikationskennung hinterlegt ist. Die Navigationsmarken können dazu dienen, direkt die absolute Position festzulegen - in diesem Fall wird eine Navigationsmarke direkt eine Positionsinformation enthalten. Es ist aber auch möglich, dass die Navigationsmarken lediglich eine Referenz in einer elektronischen Landkarte ausbilden. Um die tatsächliche Position der Navigationsmarke im Aktionsraum bestimmen zu können, muss die Identifikationskennung in einer elektronischen Landkarte des Aktionsraums nachgeschlagen werden. In einer solchen elektronischen Landkarte ist insbesondere festgelegt, welche Navigationsmarken einem Arbeitsbereich bzw. einem Fahrbereich zugeordnet sind. Somit lässt sich eine festgelegte Konfiguration der Arbeits- und Fahrbereiche einfach und rasch ändern, indem die elektronische Landkarte aktualisiert wird.

Nach einer Weiterbildung ist es vorgesehen, dass auch im Arbeitsbereich Navigationsmarken angeordnet sind, insbesondere am Boden des Arbeitsbereichs, oder dass im Aktionsraum Navigationsmarken angeordnet sind. Der Vorteil liegt darin, dass die tatsächliche Einteilung des Aktionsraums in zumindest einen Arbeitsbereich und zumindest einen Fahrbereich deutlich vereinfacht wird, da es aufgrund der (in großem Umfang) vorhandenen Navigationsmarken keine bzw. kaum Einschränkungen gibt, wo die Bereiche angeordnet sein können. Nach einer weiteren Ausführung kann auch vorgesehen sein, dass im gesamten (physischen) Raum, innerhalb welchem sich der Aktionsraum befindet, Navigationsmarken angeordnet sein können. Als nicht einschränkendes Beispiel kann diese Ausführung bedeuten, dass im gesamten Gebäude am Boden Navigationsmarken angeordnet sind und somit der Aktionsraum völlig frei festgelegt und an die Anforderungen der Bearbeitungsaufträge angepasst werden kann.

Nach einer Weiterbildung ist vorgesehen, dass die Fahrwegvorgabe einen Start- und einen Zielpunkt innerhalb des Fahrbereiches und/oder ferner eine Mehrzahl von Navigationsmarken umfasst, die durch das Transportfahrzeug abzufahren sind. Der Fahrweg wird vom übergeordneten Leitsystem (Lager-Verwaltungssystem oder Flotten-Managementsystem) ermittelt, wodurch die globale Verkehrsplanung (aller Transportfahrzeuge) optimiert durchgeführt werden kann. Das einzelne Transportfahrzeug bekommt den detaillierten Fahrweg übermittelt und braucht diesem lediglich durch Erfassung der angegebenen Navigationsmarken zu folgen. Sind die Positionen der Navigationsmarken bekannt, kann das Transportfahrzeug selbst die Steuerung übernehmen und somit weitestgehend autonom navigieren. Durch Kenntnis der aktuellen Verkehrslage, wie sie beispielweise vom Verkehrsleitsystem breitgestellt werden kann, kann das Transportfahrzeug auch selbständig Umleitungsrouten ermitteln, um so gegebenenfalls einen Bereich hoher Fahrzeugdichte zu umfahren.

Eine Weiterbildung besteht darin, dass in der Fahrwegvorgabe eine Strecken-Abschnittsgeschwindigkeit hinterlegt ist. Um einen hohen Durchsatz zu erreichen, werden die Transportfahrzeuge zumeist mit der maximal zulässigen Geschwindigkeit betrieben. Dies kann aber von Nachteil werden, wenn es in stärker frequentierten Fahrbereichen zu einer überdurchschnittlich hohen Fahrzeugdichte bzw. zu einem Stau kommt. Die Fahrwegvorgabe wird von dem Leitsystem (bevorzugt dem Flotten-Managementsystem) ermittelt, welches einen Gesamtüberblick über alle sich im Bereich einer Fahrwegvorgabe eines spezifischen Transportfahrzeugs bewegenden anderen Transportfahrzeuge hat. Daher kann es sich von Vorteil erweisen, wenn die Transportfahrzeuge in einem Fahrabschnitt entlang des Fahrwegs langsamer fahren, um vorausschauend eine zu hohe Fahrzeugdichte in einem anderen Fahrabschnitt entlang des Fahrwegs zu verhindern und somit insgesamt den Durchsatz zu erhöhen. Es ist insbesondere zu erwähnen, dass die Transportfahrzeuge die jeweilige Geschwindigkeit unabhängig/abweichend von der Fahrwegvorgabe auch selbst festlegen können. Insbesondere kann das Transportfahrzeug die lokale Verkehrssituation analysieren und darauf basierend, die Fahrgeschwindigkeit auch kleiner als die maximale (vorgegebene) Abschnittgeschwindigkeit festlegen.

Gemäß einer Weiterbildung der Erfindung kann es vorgesehen werden, dass die Steuerungseinheit der Transportfahrzeuge ferner dazu ausgebildet ist, Transportaufträge von dem Lager-Verwaltungssystem zu empfangen und auszuwerten, und wobei die Transportfahrzeuge gemäß diesen Transportaufträgen automatisch und autonom angesteuert werden, indem zu einem vierten Transportauftrag der Transportaufträge ein Quell-Ladungsträger und/oder ein Ziel-Ladungsträger zwischen einem ersten Arbeitsplatz und einem zweiten Arbeitsplatz transportiert wird / werden, wobei für einen vierten Transportauftrag der Startpunkt und Zielpunkt durch den ersten Arbeitsplatz und zweiten Arbeitsplatz gebildet sind. Es können demnach Waren / Ladungsträger zwischen Arbeitsplätzen transportiert werden. Demnach kann die Ware an einem ersten Arbeitsplatz einem ersten Bearbeitungsauftrag unterzogen und dann von einem Transportfahrzeug vorzugsweise mit einem Ladungsträger zu einem zweiten Arbeitsplatz transportiert werden, um dort einem zweiten Bearbeitungsauftrag unterzogen zu werden. Dies ist beispielsweise der Fall, wenn an einem Arbeitsplatz nur einige Arbeitsmittel zur Verfügung gestellt werden können.

Eine vorteilhafte Weiterbildung besteht auch darin, dass im Quell-Ladungsträger Ware zu einem einzigen Bearbeitungsauftrag vorhanden ist, oder dass im Quell-Ladungsträger Ware zu einer Mehrzahl von Bearbeitungsaufträgen vorhanden ist. Beispielsweise kann eine einzelne Ware zu einem Bearbeitungsauftrag zugeordnet werden, wenn diese Ware einer spezifischen Handlung unterzogen werden soll. Ebenso kann aber auch vorgesehen sein, dass im Quell-Ladungsträger eine Mehrzahl von Waren eines gleichen Warentyps vorhanden ist, die einem Bearbeitungsauftrag zugeordnet werden. Beispielsweise kann es sich um Retourware handeln, die aufbereitet werden muss, bevor weitere Handlungen durchgeführt werden können, beispielweise die Ware in das Warenlager eingelagert wird. Es kann auch vorgesehen sein, dass im Ladungsträger Waren vorhanden sind, welche einer Mehrzahl von (typgleichen) Bearbeitungsaufträgen zugeordnet sind. In diesem Fall ist es ohne Bedeutung, welche Ware für welchen Auftrag bearbeitet wird, da für jede Ware jeweils der gleiche Bearbeitungsauftrag durchgeführt wird, beispielweise ein Umpacken der Ware. Grundsätzlich kann aber auch vorgesehen sein, dass im Quell-Ladungsträger Ware vorhanden ist, welche nicht unmittelbar bzw. einem aktuellen Bearbeitungsauftrag zugeordnet ist.

Es erweist sich auch von Vorteil, wenn der Personen-Zutrittsschutz durch eine mechanische und/oder eine kontaktlose Barriere gebildet ist. Eine mechanische Barriere umfasst beispielweise ein am Boden verankertes Gitter. Eine kontaktlose Barriere zum Erfassen der Anwesenheit einer Person umfasst beispielweise einen Lichtvorhang oder ein Kamerasystem mit einer Auswerteeinheit.

Eine Weiterbildung besteht auch darin, dass der Arbeitsplatz einen Arbeitstisch, mit einer dem Bediener zugewandten ersten Seite und eine dem zweiten Fahrabschnitt zugewandten zweiten Seite aufweist, wobei die zweite Seite die Abgrenzung bildet. Diese Weiterbildung hat zwei bedeutende Vorteile. Einerseits können die Arbeitsplätze direkt an den "schnelleren" zweiten Fahrabschnitt anschließen und die Arbeitsplätze mit einer hohen Transportleistung versorgt werden. Dies ist insbesondere von Vorteil, wenn an den Arbeitsplätzen Bearbeitungsaufträge durchgeführt werden, welche kurze Zykluszeiten haben. Andererseits kann der zusätzliche Aufwand für die Anordnung eines Personen-Zutrittsschutzes wesentlich reduziert werden, da die Arbeitsplätze aufgrund ihrer konstruktiven Gegebenheiten selbst den Zutrittsschutz ausbilden. Beispielsweise können die Arbeitsplätze bzw. der Arbeitstisch an der zweiten Seite bauliche Mittel aufweisen, die einen Zutritt einer Person in den zweiten Fahrabschnitt zuverlässig verhindern, beispielweise kann an der zweiten Seite eine Wand, ein Gitter oder ein Bügel angeordnet sein, bevorzugt vom Boden bis zu einer Höhe oberhalb des Arbeitstischs.

Nach einer weiteren Ausbildung ist vorgesehen, dass der zweite Fahrabschnitt die Andienungsvorrichtung zumindest abschnittsweise umschließt. Im zweiten Fahrabschnitt können die Transportfahrzeuge mit der zweiten maximalen Fahrgeschwindigkeit betrieben werden, da sich dort (im Normalbetrieb) keine Personen aufhalten. Wie beschrieben, koppelt das Transport- und Manipulationssystem mit der Andienungsvorrichtung an ein automatisiert betriebenes Ladungsträger-Fördersystem an. Ein solches Ladungsträger-Fördersystem ist insbesondere auf eine hohe Transportleistung ausgelegt. Die hohe Transportleistung des Ladungsträger-Fördersystems (Hochleistungs-Fördersystem) wird auf eine Vielzahl von autonomen Transportfahrzeugen aufgeteilt, die im zweiten Fahrabschnitt ebenso mit der zweiten maximalen Geschwindigkeit betrieben werden können. Die Transportfahrzeuge können gegebenenfalls die hohe Transportleistung an die deutlich geringere Leistungsanforderung manueller Arbeitsplätze anpassen, wobei dies vorwiegend durch die Reduzierung der Fahrgeschwindigkeit im ersten Fahrabschnitt erfolgt.

Im Hinblick auf eine Wegoptimierung ist eine Weiterbildung von Vorteil, nach der zumindest eines der Transportfahrzeuge eine einzige Ladeebene ausbildet, auf welcher zumindest zwei Ladungsträger abgestellt werden können, oder übereinander angeordnete Ladeebenen ausbildet, auf welchen jeweils zumindest ein Ladungsträger aufgenommen werden kann, sodass mit dem zumindest einen Transportfahrzeug gleichzeitig mehrere Ladungsträger transportiert werden können. Dadurch kann die Leistungskapazität der Transportfahrzeuge optimal eingesetzt werden. Es kann bei geringerer Anzahl an Transportfahrzeugen die gleiche Transportleistung erreicht werden.

Gemäß einer Weiterbildung der Erfindung ist es vorgesehen, dass die genannten Ladungsträger durch zumindest einen Quell-Ladungsträger und zumindest einen Ziel-Ladungsträger eines (einzelnen) Bearbeitungsauftrags gebildet sind, oder dass die genannten Ladungsträger durch Ladungsträger verschiedener Bearbeitungsaufträge gebildet sind. Nach der ersten Ausführung werden sämtliche zur Durchführung eines Bearbeitungsauftrags erforderlichen Ladungsträger an einem Arbeitsplatz bereitgestellt. Nach der zweiten Ausführung können zu verschiedenen Bearbeitungsaufträgen entweder Quell-Ladungsträger oder Ziel-Ladungsträger, oder je ein Quell-Ladungsträger und Ziel-Ladungsträger transportiert werden.

Im Sinne einer Ablaufoptimierung ist es ferner von Vorteil, wenn der Quell-Ladungsträger nach der Durchführung des Bearbeitungsauftrags als Ziel-Ladungsträger definiert wird. Dabei gibt die Person nach Durchführung eines Bearbeitungsauftrags die Ware wieder zurück in den Ladungsträger, wobei dieser nun den Ziel-Ladungsträger bildet.

Es erweist sich auch von Vorteil, wenn die Steuerungseinheit der Transportfahrzeuge ferner dazu ausgebildet ist, Transportaufträge von dem Lager-Verwaltungssystem zu empfangen und auszuwerten, und wobei die Transportfahrzeuge gemäß diesen Transportaufträgen automatisch und autonom angesteuert werden, indem zu einem fünften Transportauftrag der Transportaufträge zumindest ein Ziel-Ladungsträger, insbesondere ein leerer Ziel-Ladungsträger, an einer das Transport- und Manipulationssystem umfassenden Bereitstellungsstation übernommen und zu einem der Arbeitsplätze transportiert und dort bereitgestellt wird, um anschließend einen Bearbeitungsauftrag an diesem Arbeitsplatz durchzuführen. Beispielshaft kann ein Bearbeitungsauftrag darin bestehen, eine Mehrzahl bereitgestellter Waren aufzubereiten und zu vereinzeln. In diesem Fall wird am Arbeitsplatz stets ein und zumeist leerer Ziel-Ladungsträger bereitgestellt. Nach einer weiteren möglichen Ausführung kann auch vorgesehen sein, dass das Transportfahrzeug den Ziel-Ladungsträger bereitstellt und diesen, nachdem die Person die Ware am Ziel-Ladungsträger abgelegt hat, gemäß einem Transportauftrag wieder abtransportiert.

Die Aufgabe der Erfindung wird auch durch ein Verfahren zum Transport von Ladungsträgern und zur Durchführung von manuellen Bearbeitungsaufträgen in einem Transport- und Manipulationssystem gemäß Anspruch 16 gelöst.

Das Transportfahrzeug wird entlang dem Fahrweg in einem ersten Fahrabschnitt mit einer ersten maximalen Fahrgeschwindigkeit und in einem zweiten Fahrabschnitt mit einer zweiten maximalen Fahrgeschwindigkeit bewegt, wobei die zweite maximale Fahrgeschwindigkeit höher ist als die erste maximale Fahrgeschwindigkeit, und wobei der zweite Fahrabschnitt gegenüber dem ersten Fahrabschnitt durch eine Abgrenzung abgegrenzt ist, welche von den Transportfahrzeugen (nur) an zumindest einer vorbestimmten Passierzone passiert werden kann.

Damit ist im ersten Fahrbereich jedenfalls die Personensicherheit gewährleistet, während sich im zweiten Fahrabschnitt die Transportfahrzeuge mit einer höheren Fahrgeschwindigkeit bewegen können, um eine möglichst hohe Transportleistung zu erreichen.

Erfindungsgemäß ist vorgesehen, dass bei einem Zutritt der Person vom ersten Fahrabschnitt in den zweiten Fahrabschnitt durch Passieren der Abgrenzung die zweite maximale Fahrgeschwindigkeit auf gleich der ersten maximalen Fahrgeschwindigkeit festgelegt wird. Insbesondere kann der Personen-Zutrittsschutz eine Überwachungsvorrichtung umfassen, die dazu ausgebildet sind, einen Zutritt der Person in den zweiten Fahrabschnitt durch Passieren des Personen-Zutrittsschutz zu erkennen und gegebenenfalls ein Warnsignal zu generieren, wie oben beschrieben. Dieses Warnsignal wird beispielweise an das Lager-Verwaltungssystem übermittelt, welches das Signal auswertet und ein Steuersignal bzw. eine Fahrwegvorgabe an die Transportfahrzeuge im zweiten Fahrabschnitt übermittelt, sodass die genannten Transportfahrzeuge in einen Sicherheitsmodus umgeschaltet werden. Beispielsweise wird die zweite maximale Fahrgeschwindigkeit auf die erste maximale Fahrgeschwindigkeit festgelegt, sodass die genannten Transportfahrzeuge kurzzeitig auch im zweiten Fahrabschnitt maximal mit der ersten Fahrgeschwindigkeit bewegt werden. Demnach ist auch bei unbefugten Zutritt der Person von dem ersten Fahrabschnitt in den zweiten Fahrabschnitt die Personensicherheit sichergestellt. Eine solche Verfahrensmaßnahme ist von Vorteil, da der Betrieb aufrecht erhalten bleibt und nicht gestoppt werden muss. Hat die Person den zweiten Fahrabschnitt wieder verlassen, kann im zweiten Fahrabschnitt wieder die zweite maximale Fahrgeschwindigkeit aktiviert/freigegeben werden. Nach einer weiteren möglichen Ausführung kann auch eine eigene Sicherheits-Vorgabe an die Transportfahrzeuge übermittelt werden, um die Geschwindigkeitsvorgabe zu übermitteln.

Von Vorteil ist auch, wenn nach Auswertung eines Transportauftrags das Transportfahrzeug autonom in die Startposition fährt. Das Transportfahrzeug kann unter Kenntnis und Berücksichtigung der aktuellen Position die vorgegebene Startposition anfahren. Die (neuen) Transportaufträge werden zumeist asynchron zum Bearbeitungsstatus der Transportaufträge an die Transportfahrzeuge übermittelt.

Ein zuverlässiger Transport von Waren / Ladungsträgern wird erreicht, wenn beim Übergang vom ersten Fahrabschnitt in den zweiten Fahrabschnitt und umgekehrt, die Fahrgeschwindigkeit des jeweiligen Transportfahrzeugs graduell angepasst wird. Abrupte Geschwindigkeitswechsel werden vermieden. Ferner werden starke Beschleunigungen und Spitzen beim Energieverbrauch vermieden, was sich insbesondere für batteriebetriebe Transportfahrzeuge als günstig erweist.

Um im zweiten Fahrabschnitt eine möglichst hohe Transportleistung zu erreichen, ist es nach einer Weiterbildung vorgesehen, dass sich die Transportfahrzeuge im zweiten Fahrabschnitt überwiegend entlang geradliniger Fahrwege bewegen. Je weiter ein Transportfahrzeug einer geraden Wegstrecke folgen fahren kann, desto höher können die zweiten Fahrgeschwindigkeiten definiert werden. Beispielsweise kann dies vorgesehen sein, um örtlich weit von der Andienungsvorrichtung entfernte Arbeitsplätze zu bedienen.

Eine Weiterbildung besteht auch darin, dass in einem Konfigurationsschritt der zumindest eine Fahrbereich und/oder der zumindest eine Arbeitsbereich innerhalb des Aktionsraums festgelegt wird, insbesondere durch Zuordnung von Navigationsmarken zu dem zumindest einen Fahrbereich und/oder zumindest einen Arbeitsbereich. Der Konfigurationsschritt kann im Zuge der Erstinbetriebnahme des Transport- und Manipulationssystems erfolgen. Ergibt sich während des laufenden Betriebs eine Forderung nach einer anderen Konfiguration, kann die bestehende Konfiguration aufgehoben und in einem neuerlichen Konfigurationsschritt eine neue Konfiguration festgelegt werden.

Nachfolgend finden sich Definitionen verwendeter Begriffe.

Unter "Navigationsmarken" werden ortsfeste Elemente verstanden, durch die eine Position innerhalb des Aktionsraums eindeutig festlegbar ist. Eine Navigationsmarke kann nun selbst die Positionsinformation beinhalten oder sie bildet eine Referenz in einer elektronischen Landkarte des Aktionsraums. Bevorzugt sind die Navigationsmarken so angeordnet bzw. ausgebildet, dass sie bei der bestimmungsgemäßen Bewegung der Transportfahrzeuge innerhalb des Fahrbereichs von diesen regelmäßig erfasst werden.

Unter einem "Transportfahrzeug" wird ein sich autonom bewegendes Fahrzeug verstanden, das in der Lage ist, einen vom Leitsystem empfangenen Fahrweg abzufahren, indem es Navigationsmarken erfasst und sich entlang dem Fahrweg bewegt. Das Transportfahrzeug umfasst ein Fahrgestell, eine Fahrsteuerung, einen Fahrantrieb, einen Energiespeicher und (optional) zumindest eine auf dem Fahrgestell angeordnete Ladeplattform zur Aufnahme / Abgabe / Transport einer / mehrerer Ware(n) bzw. eines / mehrere Ladungsträger(s). Schließlich kann das Transportfahrzeug auch Sensoren zum Erfassen der Umgebung des autonomen Transportfahrzeugs und zur Orientierung im Raum umfassen. Das Fahrgestell ist mit Rädern versehen, wovon zumindest eines der Räder mit dem Fahrantrieb gekuppelt ist, und zumindest eines der Räder lenkbar ist. Es können auch beide Räder mit dem Fahrantrieb gekuppelt und durch diesen angetrieben werden. Das Transportfahrzeug kann vier Räder umfassen, wovon zwei Räder lenkbar sind. Die Fahrsteuerung umfasst eine Datenverarbeitungseinheit, um die Fahrwegvorgabe und die erfassten Navigationsmarken auszuwerten und den Fahrantrieb anzusteuern.

Es kann auch vorgesehen werden, dass ein Transportfahrzeug eine Fahrwegvorgabe übermittelt bekommt und diese durch Erfassen der Navigationsmarken abfährt, dabei jedoch begrenzt seinen Fahrweg anpassen kann, um beispielweise einem Hindernis auszuweichen. Nach einer anderen Ausführung kann das Transportfahrzeug als Fahrauftrag nur eine Start- und eine Zielposition übermittelt bekommen, die konkrete Fahrwegplanung erfolgt durch das Transportfahrzeug, wobei jedoch von einem Leitsystem korrigierend eingegriffen werden kann.

Unter einem "Lager-Verwaltungssystem" (WMS) wird ein Rechnersystem verstanden, an dem die Bearbeitungsaufträge erfasst werden.

Ein "Bearbeitungsauftrag" wird als Datensatz elektronisch erfasst und von dem "Lager-Verwaltungssystem" verarbeitet. Gemäß der Erfindung umfassen solche Bearbeitungsaufträge jedoch keine Kommissionieraufträge. Demnach handelt es sich um zu Kommissionieraufträgen verschiedene Aufträge, so genannte Bearbeitungsaufträge. So kann sich ein Bearbeitungsauftrag an einen Kommissionierauftrag anschließen, sobald zu diesem Kommissionierauftrag eine oder mehrere Auftragszeilen kommissioniert wurden. Ein Kommissionierauftrag umfasst eine oder mehrere Auftragszeilen, wobei jede Auftragszeile jeweils eine (bestellte) Ware nach ihrem Warentyp und ihrer (bestellten) Stückzahl spezifiziert.

Die Bearbeitungsaufträge umfassen insbesondere einen oder mehrere Mehrwertdienste (Value Added Services), beispielweise Verpacken, Entsorgen, Etikettieren, das Beifügen eines Beipackzettels oder einer Rechnung zur Ware und dgl., oder die Aufbereitung von Retourwaren oder eine Qualitätskontrolle einer Ware, beispielweise eine Sichtkontrolle einer Retourware, oder einen Umpackauftrag oder einen Nachschubauftrag. Von einem Umpackauftrag wird gesprochen, wenn Waren beispielweise im Wareneingang von einem Anliefergebinde auf Ladungsträger umzuladen sind. Unter einem Nachschubauftrag versteht man das Auffüllen der Ladungsträger mit Waren.

Im Wareneingang können auch Kenngrößen (Abmessungen, Gewicht, Dichte und dgl.) zu den Waren erfasst und als Waren-Stammdaten in einem Speichermodul des "Lager-Verwaltungssystems" hinterlegt werden.

Unter "Ladungsträger" wird ein Behälter, Karton, Tablar, eine Hängetasche und dgl. verstanden. In Abhängigkeit von der Ausbildung des Ladungsträgers kann die Ware im Ladungsträger angeordnet werden, wenn dieser beispielweise als Behälter, Karton oder Hängetasche ausgebildet ist, oder auf dem Ladungsträger angeordnet werden, wenn dieser beispielweise als Tablar ausgebildet ist.

Unter "Ware" wird insbesondere Ware zu einer Warenkommission, Retourware zu einer Warenkommission oder Nachschubware (Lagerware) verstanden.

Unter einem "Flotten-Managementsystem" (FMS) wird ein Rechnersystem verstanden, welches Transportaufträge und Fahrwegvorgaben für die Transportfahrzeuge (AMR) generiert. Das "Flotten-Managementsystem" kann mit dem "Lager-Verwaltungssystem" kommunizieren und Daten, insbesondere die datentechnisch erfassten Bearbeitungsaufträge übermitteln. Andererseits kann das "Lager-Verwaltungssystem" auch das "Flotten-Managementsystem" umfassen. Insbesondere umfasst das "Flotten-Managementsystem" ein Auftragsverwaltungssystem, welches den einzelnen Transportfahrzeugen die jeweiligen Fahraufträge zuordnet. Ferner umfasst das "Flotten-Managementsystem" ein Verkehrsverwaltungssystem, welches über aktuelle Verkehrsinformationen (Verkehrsdichte, Häufungspunkte, Bereiche mit Störungen, etc.) verfügt, und welche die Verkehrsinformationen dem Auftragsverwaltungssystem für Ihre Fahrwegplanung zur Verfügung stellt bzw. gegebenenfalls korrigierend eingreift. Durch Kenntnis der durchzuführenden Transportaufgaben und durch Kenntnis einer aktuellen Position der Transportfahrzeuge kann dieses Verkehrsleitsystem auch die künftigen Positionen der Transportfahrzeuge ermitteln und dies bei der Generierung der Fahrwegvorgaben berücksichtigen und die Fahrwege so planen, dass es zu keinen lokalen Häufungen von Transportfahrzeugen kommt. Insbesondere können die Fahrwege auch so geplant werden, dass später ein Stau verhindert wird.

Die "Andienungsvorrichtung" umfasst eine Übernahmestation und eine Übergabestation, wobei an der Übernahmestation ein Ladungsträger, insbesondere ein Quell-Ladungsträger oder gegebenenfalls ein leerer Ziel-Ladungsträger, von der Übernahmestation auf ein Transportfahrzeug übernommen wird und an der Übergabestation ein Ladungsträger, insbesondere ein Ziel-Ladungsträger, von einem Transportfahrzeug auf die Übergabestation übergeben wird. Die Übernahmestation ist beispielsweise durch einen Abstellplatz auf dem Ladungsträger-Fördersystem gebildet. Die Übergabestation ist beispielsweise durch einen Abstellplatz auf dem Ladungsträger-Fördersystem gebildet. Die Übernahme und Übergabe der Ware / des Ladungsträgers zwischen der Übernahmestation / Übergabestation und dem Transportfahrzeug erfolgt durch eine automatisiert betriebene Umsetzvorrichtung. Die Übernahmestation / Übergabestation kann diese Umsetzvorrichtung aufweisen, beispielweise einen Pusher. Andererseits kann auch das Transportfahrzeug diese Umsetzvorrichtung aufweisen, beispielweise eine Fördervorrichtung. Ebenso kann die Umsetzvorrichtung auch eine Waren-Handhabungsvorrichtung bzw. Ladungsträger- Handhabungsvorrichtung umfassen, beispielweise einen Roboter (Knickarmroboter oder Portalroboter) mit einem Greifer.

Es sei an dieser Stelle hingewiesen, dass ein Ziel-Ladungsträger, welcher von einem Arbeitsplatz zur Übergabestation transportiert und auf die Übergabestation übergeben wurde, durch das Ladungsträger-Fördersystem von der Andienungsvorrichtung zum Warenausgang transportiert wird.

Zum besseren Verständnis der Erfindung wird diese anhand der nachfolgenden Figuren näher erläutert.
- Fig. 1: zeigt eine erste Ausführung eines Transport- und Manipulationssystems, in Draufsicht;
- Fig. 2: zeigt eine zweite Ausführung eines Transport- und Manipulationssystems, in Draufsicht;
- Fig. 3a, 3b: zeigen verschiedene Ausführungen einer Abgrenzung zwischen einem ersten Fahrabschnitt und zweiten Fahrabschnitt, in Ansicht;
- Fig. 4: zeigt einen Aktionsraums mit einer möglichen Anordnung von Navigationsmarken;
- Fig. 5: zeigt eine schematische Darstellung für die Abarbeitung von Transportaufträgen und deren Fahrwege.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und bei einer Lageänderung sinngemäß auf die neue Lage zu übertragen.

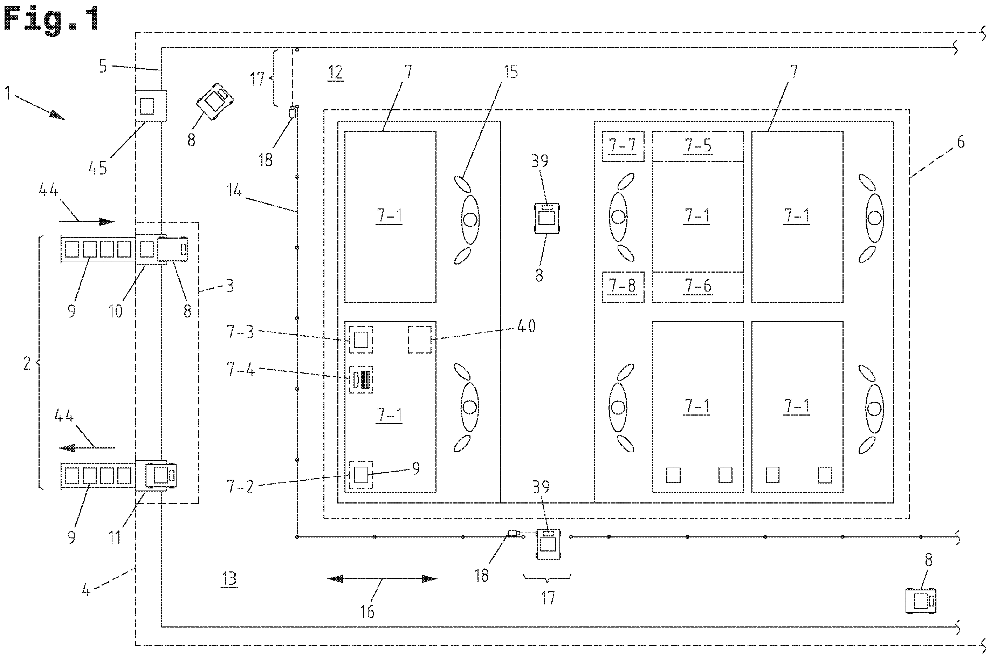

Fig. 1 zeigt eine erste Ausführung eines Transport- und Manipulationssystems 1, welches mit einer Andienungsvorrichtung 3 an ein automatisiert betriebenes Ladungsträger-Fördersystem 2 anschließt. Das Ladungsträger-Fördersystem ist ein stationäres Ladungsträger-Fördersystem. Üblicherweise ist an dem Ladungsträger-Fördersystem auch ein Wareneingang, Warenausgang, Warenlager zur Lagerung von Waren mit Ladungsträgern und ein Kommissioniersystem mit einem oder mehreren Kommissionierarbeitsplätzen zur automatischen / manuellen Durchführung von Kommissionieraufträgen angeschlossen, wie beispielweise in der internationalen Veröffentlichung WO 2018/006112 A1 oder internationalen Anmeldung PCT/AT2019/060077 beschrieben.

Wie in Fig. 1 in strichlierte Linien eingetragen, ist das Transport- und Manipulationssystem 1 innerhalb eines Aktionsraums 4 definiert. Die Andienungsvorrichtung 3 ist im Aktionsraum 4 angeordnet und das Ladungsträger-Fördersystem 2 grenzt an den Aktionsraum 4 an.

Das Transport- und Manipulationssystem 1 kann auch eine (optionale) schematisch eingetragene Bereitstellungsstation 45 umfassen, an welcher leere Ziel-Ladungsträger 9 bereitgestellt werden. Alternativ können die leeren Ziel-Ladungsträger 9 aber auch an der Andienungsvorrichtung 3, insbesondere einer Übernahmestation 10 bereitgestellt werden.

Der Aktionsraum 4 umfasst nach gezeigter Ausführung
- einen Fahrbereich 5, in welchem sich eine Mehrzahl von autonomen Transportfahrzeugen 8 bewegen können und welche die Andienungsvorrichtung 3 mit Arbeitsplätzen 7 fördertechnisch verbinden,
- einen Arbeitsbereich 6, in welchem eine Mehrzahl statischer Arbeitsplätze 7 zur manuellen Durchführung von Bearbeitungsaufträgen durch Personen 15 (Bediener) angeordnet sind.

Grundsätzlich kann der Aktionsraum 4 aber mehr als einen Fahrbereich 5 und mehr als einen Arbeitsbereich 6 umfassen.

Die Andienungsvorrichtung 3 umfasst eine Übernahmestation 10 und eine Übergabestation 11. Nach gezeigter Ausführung sind die Übernahmestation 10 und Übergabestation 11 voneinander getrennt angeordnet. Grundsätzlich können die Übernahmestation und Übergabestation auch kombiniert und durch eine einzige Übernahme- und Übergabestation gebildet werden.

Die Übernahmestation 10 und Übergabestation 11 umfassen jeweils einen Abstellplatz, auf welchem ein Ladungsträger 9 abgestellt werden kann. Einerseits können die Übernahmestation 10 und Übergabestation 11 unmittelbar an das Ladungsträger-Fördersystem 2 anschlie-βen. Anderseits kann das Ladungsträger-Fördersystem 2 auch die Übernahmestation 10 und Übergabestation 11 umfassen.

Das Ladungsträger-Fördersystem 2 umfasst eine Fördervorrichtung zum Antransport von Ladungsträgern 9 zu der Übernahmestation 10, siehe Pfeil 44 von links nach rechts, und eine Fördervorrichtung zum Abtransport von Ladungsträgern 9 von der Übergabestation 11, siehe Pfeil 44 von rechts nach links. Die Ladungsträger 9 sind beispielweise Behälter oder Kartons.

Das Transportfahrzeug 8 kann von der Übernahmestation 10 einen Ladungsträger, insbesondere einen Quell-Ladungsträger, übernehmen oder das Transportfahrzeug 8 kann an die Übergabestation 11 einen Ladungsträger, insbesondere einen Ziel-Ladungsträger, abgeben.

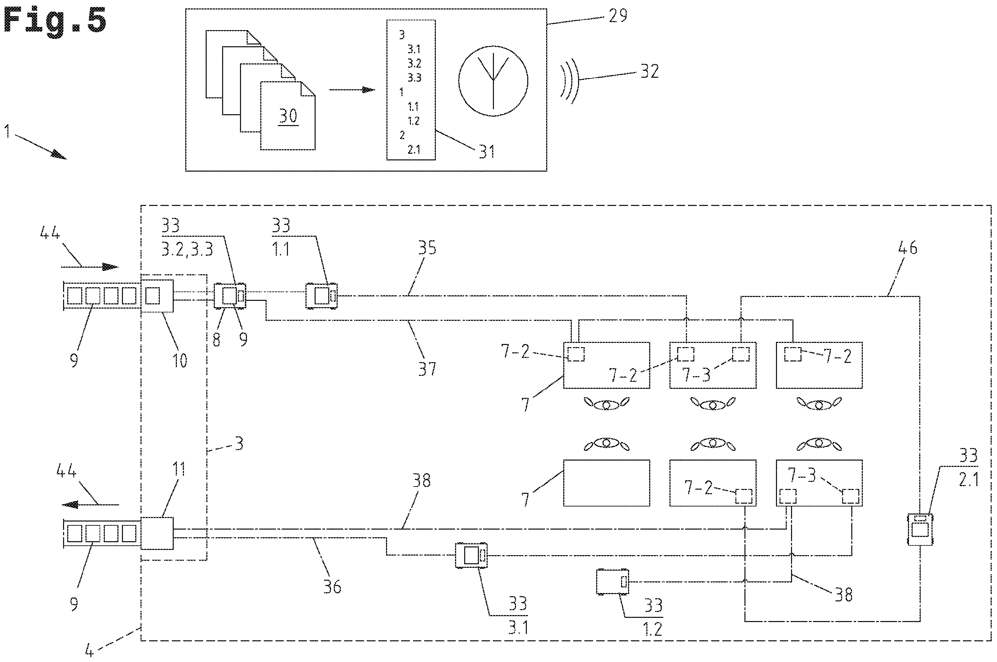

Die Transportfahrzeuge 8 umfassen je eine Steuerungseinheit 39, welche dazu ausgebildet ist, Transportaufträge von einem Lager-Verwaltungssystem 29 (siehe Fig. 5) zu empfangen und auszuwerten. Die autonome Steuerung der Transportfahrzeuge 8 wird von der betreffenden Steuerungseinheit 39 übernommen, welche zur selektiven Ansteuerung eines (nicht dargestellten) Fahrantriebs ausgebildet ist, um somit einen spezifischen Fahrweg abfahren zu können. Ferner können die Transportfahrzeuge 8 jeweils einen Sensor aufweisen, welcher mit der Steuerungseinheit 39 verbunden ist, um Hindernisse am Weg zu erkennen und darauf basierend eine Aktion auszulösen. Insbesondere muss die Steuerungseinheit 39 sicherstellen, dass es zu keiner Kollision zwischen den Transportfahrzeugen 8 oder mit einem Hindernis kommt.

Insbesondere können die Transportfahrzeuge 8 gemäß der Transportaufträge automatisch und autonom angesteuert werden, indem zumindest
- zu einem ersten Transportauftrag der Transportaufträge, ein Quell-Ladungsträger 9 an der Übernahmestation 10 übernommen, zu einem der Arbeitsplätze 7 transportiert und dort bereitgestellt wird, um anschließend einen Bearbeitungsauftrag an diesem Arbeitsplatz 7 durchzuführen, und/oder
- zu einem zweiten Transportauftrag der Transportaufträge, ein Ziel-Ladungsträger 9 an einem der Arbeitsplätze 7 übernommen, zur Übergabestation 11 transportiert und dort abgegeben wird, nachdem ein Bearbeitungsauftrag an diesem Arbeitsplatz 7 abgeschlossen wurde, und/oder
- zu einem dritten Transportauftrag der Transportaufträge ein Arbeitsmittel-Ladungsträger zu genanntem Arbeitsplatz 7 antransportiert oder von genanntem Arbeitsplatz 7 abtransportiert wird, und/oder
- zu einem vierten Transportauftrag der Transportaufträge ein Quell-Ladungsträger 9 und/oder ein Ziel-Ladungsträger 9 zwischen einem ersten Arbeitsplatz 7 und einem zweiten Arbeitsplatz 7 transportiert wird / werden, wobei für einen vierten Transportauftrag der Startpunkt 26 und Zielpunkt 27 durch den ersten Arbeitsplatz 7 und zweiten Arbeitsplatz 7 gebildet sind, und/oder
- einem fünften Transportauftrag der Transportaufträge zumindest ein Ziel-Ladungsträger 9, insbesondere ein leerer Ziel-Ladungsträger, an der Bereitstellungsstation 45 übernommen und zu einem der Arbeitsplätze 7 transportiert und dort bereitgestellt wird, um anschließend einen Bearbeitungsauftrag an diesem Arbeitsplatz 7 durchzuführen.

Die Steuerungseinheit 39 umfasst ein nicht näher dargestelltes Speichermittel, in welchem eine Karte der Navigationsmarken 19 und/oder eine Karte des zumindest einen Fahrbereichs 5 und/oder des zumindest einen Arbeitsbereichs 6 hinterlegt ist.

Wie in Fig. 1 ersichtlich, ist der Fahrbereich 5 in einen ersten Fahrabschnitt 12 und einen zweiten Fahrabschnitt 13 unterteilt. Dies wird dadurch erreicht, dass der zweite Fahrabschnitt 13 gegenüber dem ersten Fahrabschnitt 12 durch eine Abgrenzung 14 abgegrenzt ist, welche von den Transportfahrzeugen 8 (nur) an zumindest einer vorbestimmten Passierzone 17 passiert werden kann. Der erste Fahrabschnitt 12 ragt in den zumindest einen Arbeitsbereich 6 hinein. Innerhalb dieses Arbeitsbereichs 6 dürfen sich Personen 15 bewegen. Der zweite Fahrabschnitt 13 koppelt an die Andienungsvorrichtung 3 an. Insbesondere ist es von Vorteil, wenn der zweite Fahrabschnitt 13 die Andienungsvorrichtung 3 zumindest teilweise umschließt.

Bewegen sich die Transportfahrzeuge 8 im ersten Fahrabschnitt 12, so ist für diese eine erste maximale Fahrgeschwindigkeit festgelegt. Bewegen sich die Transportfahrzeuge 8 im zweiten Fahrabschnitt 13, so ist für diese eine zweite maximale Fahrgeschwindigkeit festgelegt. Die zweite maximale Fahrgeschwindigkeit ist höher als die erste maximale Fahrgeschwindigkeit. Insbesondere kann die erste maximale Fahrgeschwindigkeit auch als "personensichere" Fahrgeschwindigkeit bezeichnet werden. "Personensicher" bedeutet in diesem Zusammenhang, dass die Person 15 keinem gefährlichen Verletzungsrisiko ausgesetzt ist, wenn diese mit einem Transportfahrzeug 8 kollidieren würde. Die erste maximale Fahrgeschwindigkeit und/oder die zweite maximale Fahrgeschwindigkeit kann durch das Lager-Verwaltungssystem 29 festgelegt sein.

Mit dieser Ausführung ist es möglich, dass im ersten Fahrabschnitt 12 ein gemeinsames Agieren von Personen 15 und Transportfahrzeugen 8 möglich ist, da sich die Transportfahrzeuge 8 mit maximal einer ersten Fahrgeschwindigkeit (erste Höchstgeschwindigkeit = Sicherheitsgeschwindigkeit) bewegen, die ein sicheres Anhalten des Transportfahrzeugs 8 vor einem plötzlich auftretenden Hindernis gewährleistet. Im zweiten Fahrabschnitt 13 können sich die Transportfahrzeuge 8 mit einer höheren maximalen Fahrgeschwindigkeit (zweite Höchstgeschwindigkeit) bewegen, da sich im zweiten Fahrabschnitt 13 nicht gleichzeitig Personen 15 aufhalten. Dies wird durch die Abgrenzung 14 sichergestellt. Es ist daher im zweiten Fahrabschnitt 13 keine Sicherheitsgeschwindigkeit erforderlich, da die Transportfahrzeuge 8 nicht mit plötzlich auftauchenden Hindernissen rechnen müssen. Es ist jedoch von Vorteil, wenn die tatsächliche Fahrgeschwindigkeit von den Transportfahrzeugen 8 gemäß dem aktuellen Verkehrsaufkommen gewählt wird bzw. dass diese durch die Fahrwegvorgabe festgelegt werden kann.

Üblicherweise zeichnet sich das oben beschriebene Ladungsträger-Fördersystem 2 durch eine hohe Transportleistung (hohe Transportkapazität) aus, die jedoch bei den manuellen Arbeitsplätzen 7 grundsätzlich nicht erforderlich ist. Typischerweise können mit einem solchen Ladungsträger-Fördersystem 2 einige hunderte Ladungsträger 9 je Stunde transportiert werden. Am einzelnen manuellen Arbeitsplatz 7 werden typischer Weise weniger als zehn Ladungsträger 9 je Stunde benötigt. Der Vorteil der Ausführung besteht nun darin, dass das Ladungsträger-Fördersystem 2 mit seiner "typischen" Transportleistung arbeiten kann, da sich die autonomen Transportfahrzeuge 8 in dem an die Andienungsvorrichtung 3 angrenzenden zweiten Fahrabschnitt 13 mit ihrer hohen zweiten maximalen Fahrgeschwindigkeit bewegen dürfen. Es können demnach die Übernahmestation 10 und Übergabestation 11 von den autonomen Transportfahrzeuge 8 in hoher Frequenz angefahren werden.

Mit dem beschriebenen Transport- und Manipulationssystem 1 kann die hohe Transportleistung von der Andienungsvorrichtung 3 auf die "Fläche" verteilt werden. Die hohe Transportleistung wird von der (punktuellen) Andienungsvorrichtung 3 auf eine Vielzahl von autonomen Transportfahrzeugen 8 aufgeteilt. Selbst wenn mehrere Übernahmestationen 10 und/oder Übergabestationen 11 vorhanden sind, lässt sich die hohe Transportleistung als punktförmige Quelle oder Senke sehen, während die erforderliche Transportleistung an den Arbeitsplätzen 7 über eine große Fläche verteilt ist - daher stammt auch die Bezeichnung die Transportleistung auf die Fläche zu bringen.

Der Fahrbereich 5 ist in Fig. 1 durch die durchgezogene Linie dargestellt. Dieser ist beispielweise durch eine physische Barriere oder durch eine Grenze definiert. Diese Grenze ist bevorzugt eine logische Grenze, die beispielweise durch die Navigationsmarken festgelegt ist. Die Transportfahrzeuge 8 können sich innerhalb des Fahrbereichs 5 frei bewegten.

Ein Arbeitsplatz 7 kann grundsätzlich so ausgebildet sein, dass verschiedenste Bearbeitungsaufträge durchgeführt werden können. Beispielweise können an einem der Arbeitsplätze 7 die Bearbeitungsaufträge "Verpacken einer Warenkommission" und "Beilegen eines Prospektes zur Warenkommission" durchgeführt werden.

Die statischen Arbeitsplätze 7 umfassen hierzu einen Arbeitstisch 7-1, eine Stellplatzfläche 7-2 zur Pufferung zumindest eines Quell-Ladungsträgers 9, eine Stellplatzfläche 7-3 zur Pufferung zumindest eines Ziel-Ladungsträgers 9 und (optional) eine Benutzerschnittstelle 7-4 mit einer Ausgabevorrichtung und/oder einer Eingabevorrichtung. Durch die Ausgabevorrichtung der Benutzerschnittstelle 7-4 kann die Person 15 angewiesen werden, gemäß dem Bearbeitungsauftrag einen Bearbeitungsschritt an der Ware vorzunehmen, welche aus dem Quell-Ladungsträger 9 entnommenen wird. Die Ware entspricht in genanntem Beispiel der Warenkommission, welche zu verpacken ist und welcher ein Prospekt beizulegen ist. Durch die Eingabevorrichtung der Benutzerschnittstelle 7-4 kann die Person 15 angewiesen werden, einen Bearbeitungsschritt zu bestätigen.

Die Ausgabevorrichtung kann beispielweise durch einen Bildschirm gebildet sein, auf welchem eine Beschreibung der Handlungen des durchzuführenden Bearbeitungsauftrags dargestellt wird. Die Eingabevorrichtung kann beispielweise durch eine Tastatur, einen Bestätigungsknopf oder einer Scanvorrichtung gebildet sein, womit die Person 15 unter anderem den Abschluss des Bearbeitungsauftrags bestätigen kann. Aus Gründen der besseren Übersicht sind nur an einem Arbeitsplatz 7 die Stellplatzfläche 7-2 zur Pufferung zumindest eines Quell-Ladungsträgers 9, die Stellplatzfläche 7-3 zur Pufferung zumindest eines Ziel-Ladungsträgers 9 und die Benutzerschnittstelle 7-4 dargestellt.

Der Bearbeitungsauftrag kann beispielweise auch eine Qualitätskontrolle umfassen, wo jede Ware durch eine Sichtkontrolle geprüft wird, usw..

Der statische Arbeitsplatz 7 kann ferner zumindest einen Bereitstellplatz 40 für Arbeitsmittel aufweisen, auf welchem in einem initialen Konfigurationsschritt Arbeitsmittel bereitgestellt werden. Unter "Arbeitsmittel" wird Werkzeug und/oder Hilfsmaterial, wie Verpackungsmaterial, verstanden.

In Fig. 1 ist nach einer ersten Ausführung an einem der Arbeitsplätze 7 die Stellplatzfläche 7-2 zur Pufferung zumindest eines Quell-Ladungsträgers 9 und die Stellplatzfläche 7-3 zur Pufferung zumindest eines Ziel-Ladungsträgers 9 auf dem Arbeitstisch 7-1 ausgebildet. Wie nicht näher dargestellt, kann das Transportfahrzeug 8 eine Umsetzvorrichtung, beispielweise eine Fördervorrichtung, umfassen, durch welche der Quell-Ladungsträger 9 / Ziel-Ladungsträger 9 auf die Stellplatzfläche 7-2 abgegeben oder von der Stellplatzfläche 7-3 aufgenommen wird, nachdem das Transportfahrzeug 8 neben dem Arbeitstisch 7-1 positioniert wurde.

In Fig. 1 ist nach einer zweiten Ausführung an einem der Arbeitsplätze 7 die Stellplatzfläche 7-2 zur Pufferung zumindest eines Quell-Ladungsträgers 9 auf einer Anliefervorrichtung 7-5 und die Stellplatzfläche 7-3 zur Pufferung zumindest eines Ziel-Ladungsträgers 9 auf einer Abliefervorrichtung 7-6 ausgebildet. Die Anliefervorrichtung 7-5 und Abliefervorrichtung 7-6 sind seitlich neben dem Arbeitstisch 7-1 angeordnet, wie in strichpunktierte Linien eingetragen.

Die Anliefervorrichtung 7-5 und Abliefervorrichtung 7-6 sind voneinander getrennt als Anliefervorrichtung und Abliefervorrichtung gestaltet. Andererseits kann die Anliefervorrichtung 7-5 und Abliefervorrichtung 7-6 auch als kombinierte Anliefer- und Abliefervorrichtung gestaltet werden. Auch ist ein Wechselbetrieb der Anliefervorrichtung und Abliefervorrichtung denkbar, wenn diese im Wesentlichen baugleich gestaltet sind.

Zusätzlich ist je Anliefervorrichtung 7-5 eine Umsetzvorrichtung 7-7 und je Abliefervorrichtung 7-6 eine Umsetzvorrichtung 7-8 vorgesehen.

Ein Quell-Ladungsträger 9 kann durch die Umsetzvorrichtung 7-7 zwischen dem Transportfahrzeug 8 und der Anliefervorrichtung 7-5 automatisch gewechselt werden. Ein Ziel-Ladungsträger 9 kann durch die Umsetzvorrichtung 7-8 zwischen dem Transportfahrzeug 8 und der Abliefervorrichtung 7-6 automatisch gewechselt werden.

Auch wenn nach gezeigter Ausführung die Umsetzvorrichtung 7-7, 7-8 voneinander getrennt angeordnet sind, können die Umsetzvorrichtung 7-7 und Umsetzvorrichtung 7-8 auch als kombinierte Umsetzvorrichtung 7-7, 7-8 gestaltet werden. Auch ist ein Wechselbetrieb der Umsetzvorrichtungen 7-7, 7-8 denkbar, wenn diese im Wesentlichen baugleich gestaltet sind.

Nach einer nicht gezeigten Ausführung kann auch das Transportfahrzeug 8 eine Umsetzvorrichtung, beispielweise eine Fördervorrichtung, umfassen, durch welche der Quell-Ladungsträger 9 / Ziel-Ladungsträger 9 auf die Stellplatzfläche 7-2 abgegeben oder von der Stellplatzfläche 7-3 aufgenommen wird, nachdem das Transportfahrzeug 8 neben der Anliefervorrichtung 7-5 / Abliefervorrichtung 7-6 positioniert wurde. In diesem Fall sind die gezeigten Umsetzvorrichtungen 7-7, 7-8 nicht erforderlich.

Es sei an dieser Stelle hingewiesen, dass die Arbeitsplätze 7 nicht zwingenderweise identisch aufgebaut sein müssen. Insbesondere ist die Benutzerschnittstelle 7-4 mit der Ausgabevorrichtung und/oder der Eingabevorrichtung optional. Dies ist beispielweise der Fall, wenn an einem Arbeitsplatz 7 stets derselbe Bearbeitungsauftrag auszuführen und eine Bestätigungseingabe nicht erforderlich ist. Ist die Benutzerschnittstelle 7-4 vorgesehen, so kann diese auch bloß die Eingabevorrichtung umfassen. In diesem Fall, kann der Bearbeitungsauftrag beispielweise einen Umpackauftrag umfassen, wo jede Ware vereinzelt in einen Ziel-Ladungsträger 9 abgelegt werden soll.

Wie in Fig. 1 ersichtlich, kann die Abgrenzung 14 eine physische Barriere umfassen. Die physische Barriere ist beispielweise ein Gitter. Die Abgrenzung 14 kann von den Transportfahrzeugen 8 mit oder ohne Ladungsträger 9 an einer einzigen Passierzone 17 oder mehreren Passierzonen 17 passiert werden. Hingegen soll durch die Abgrenzung 14 einer Person 15 der Zutritt von dem ersten Fahrabschnitt 12 in den zweiten Fahrabschnitt 13 (physisch) verwehrt bleiben. Es kann auch vorgesehen sein, dass eine Berührung dieser Barriere durch eine Person 15 erkennbar ist. Zweckmäßigerweise kann eine Person 15 diese Passierzone(n) 17 jedoch nicht passieren.

Die Ausführung einer physischen Barriere hat den Vorteil, dass auf großräumige Überwachungsvorrichtungen verzichtet werden kann, da eine Person 15 den zweiten Fahrabschnitt 13 nicht erreichen kann.

Nach einer möglichen Ausführung ist im Bereich der Passierzone(n) 17 ein Erfassungsmittel 18 vorgesehen sind, die ein unbefugtes Hindurchschreiten einer Person 15 erkennen können.

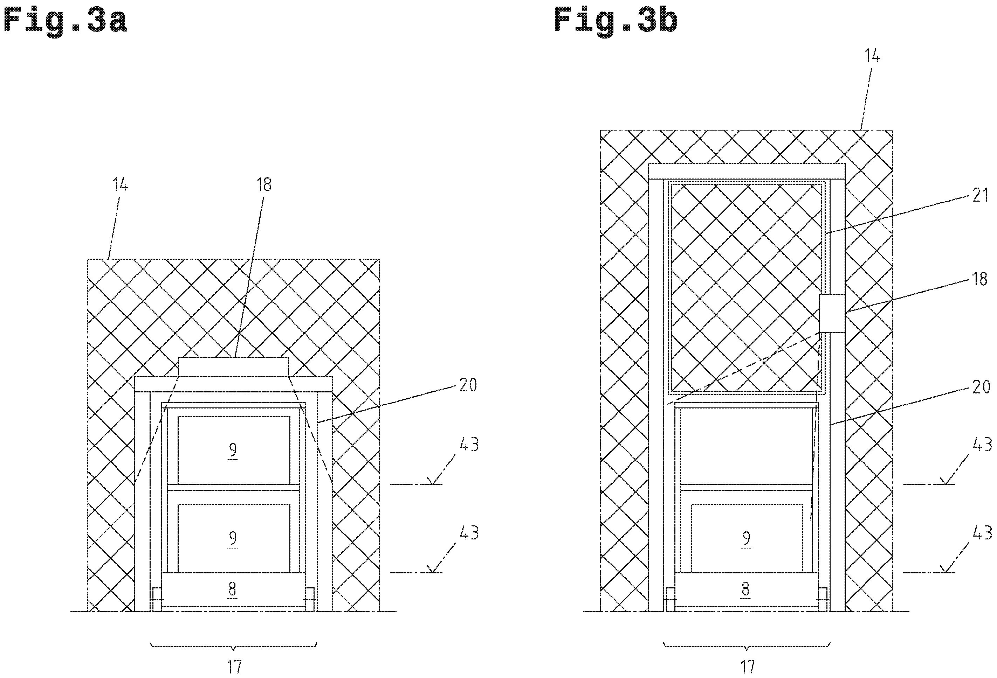

Die Passierzone(n) 17 können so gestaltet sein, wie in den Fig. 3a und 3b ersichtlich, dass in der Abgrenzung 14, insbesondere in der Barriere, eine Durchfahrtsöffnung 20 zum Passieren der Transportfahrzeuge 8 vorhanden ist. Auch wenn das Transportfahrzeug 8 kleiner als eine Person 15 ist, könnte eine Person 15 dennoch versuchen in den zweiten Fahrabschnitt 13 zu gelangen. Eine solche Zutrittsverletzung des Sicherheitsbereichs kann dann von dem Erfassungsmittel 18 erkannt werden. In diesem Fall können die Transportfahrzeuge 8 im zweiten Fahrabschnitt 13 von dem Flotten-Managementsystem (FMS) derart angesteuert werden, dass diese in einen Sicherheitsmodus (Sicherheitsbetrieb) umgeschaltet werden. Beispielsweise werden die Transportfahrzeuge 8 im zweiten Fahrabschnitt 13 gestoppt oder die Fahrgeschwindigkeit zumindest auf die erste maximale Fahrgeschwindigkeit verlangsamt, sodass sich die Transportfahrzeuge 8 auch im zweiten Fahrabschnitt 13 mit höchstens der ersten maximalen Fahrgeschwindigkeit bewegen und somit die Personensicherheit gegeben ist. Dieser Sicherheitsmodus wird solange aufrechterhalten, bis die Person 15 den zweiten Fahrabschnitt 13 wieder verlassen hat.

Nach einer weiteren möglichen Ausführung kann auch vorgesehen sein, dass das Erfassungsmittel 18 dazu ausgebildet ist, temporär einen Sicherheitsmodus im zweiten Fahrabschnitt 13 zu aktivieren, wenn eine Person 15 (geplant) den zweiten Fahrabschnitt 13 betreten möchte, beispielweise um Servicetätigkeiten durchführen zu können, ohne dass dadurch der Betrieb der Transportfahrzeuge 8 eingestellt werden müsste.

Wie in Fig. 1 eingetragen, kann es sich auch von Vorteil erweisen, wenn der zweite Fahrabschnitt 13 geradlinige Fahrwege 16 ausbildet, entlang welcher die Transportfahrzeuge 8 überwiegend bewegt werden. Auf diese Weise können von der Andienungsvorrichtung 3 weit entfernte Arbeitsplätze 7 mit hoher Transportleistung versorgt werden.

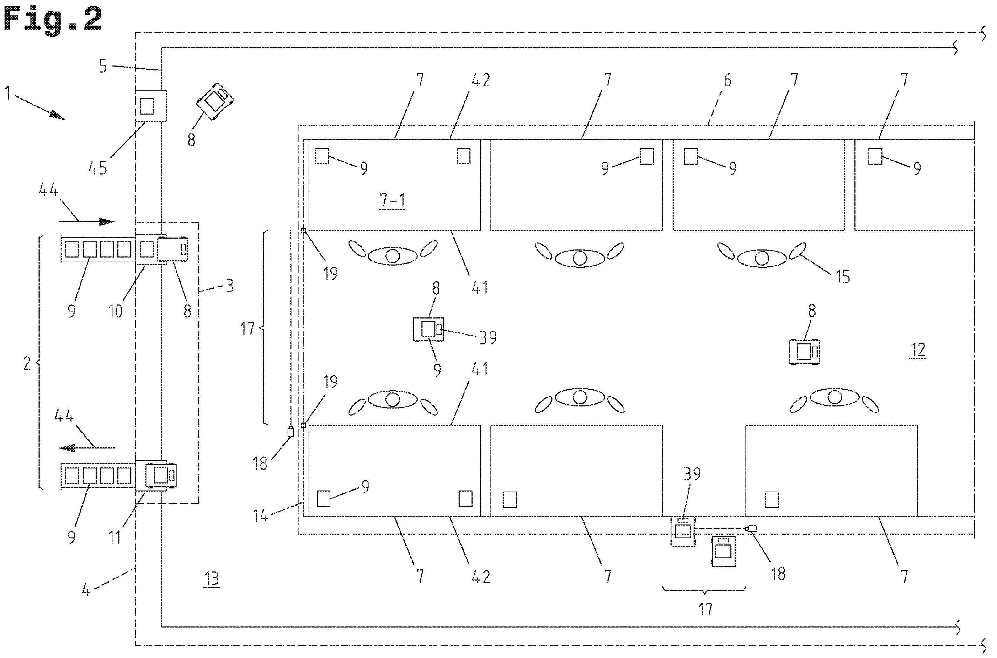

Fig. 2 zeigt eine zweite Ausführung eines Transport- und Manipulationssystems 1, welches sich gegenüber der ersten Ausführung im Wesentlichen in der Anordnung der Arbeitsplätze 7 und Abgrenzung 14 unterscheidet.

Die Arbeitsplätze 7 sind mit gegenseitigem Abstand und in parallelen Reihen angeordnet. Es ist zwischen den Arbeitsplätzen 7 eine Gasse (Gehweg) ausgebildet.

Der Arbeitstisch 7-1 jedes Arbeitsplatzes 7 bildet eine dem Bediener 15 zugewandte erste Seite 41 und eine dem zweiten Fahrabschnitt 13 zugewandte zweite Seite 42 aus, wobei die zweite Seite 42 der Arbeitstische 7-1 einen Teilabschnitt der Abgrenzung 14 zwischen dem ersten Fahrabschnitt 12 und dem zweiten Fahrabschnitt 13 bildet.

Der Vorteil dieser Ausbildung liegt nun insbesondere darin, dass im Wesentlichen nur an den Enden der Gasse und zwischen den Reihen von Arbeitsplätzen 7 je eine physische Barriere baulich als zusätzliche Abgrenzung 14 erforderlich ist. Sind die Arbeitsplätze 7 an eine Gebäudewand (nicht dargestellt) gereiht, ist im Wesentlichen nur an einem der Enden der Gasse und zwischen den Reihen von Arbeitsplätzen 7 eine physische Barriere baulich als zusätzliche Abgrenzung 14 erforderlich. An den Längsseiten der Arbeitsplätze 7 kann eine zusätzliche physische Barriere als bauliche Abgrenzung entfallen, da diese bereits durch die Anordnung und Ausbildung der Arbeitstische 7-1 vorhanden ist. Diesbezüglich können beispielsweise die Arbeitstische 7-1 eine Rückwand aufweisen, sodass ein Überklettern oder ein Durchkriechen verhindert wird.

Die Gasse zwischen den parallelen Reihen von Arbeitsplätzen 7 bildet den ersten Fahrabschnitt 12, wo sich die Personen 15 und die autonome Transportfahrzeuge 8 gleichzeitig aufhalten und bewegen. Hier gilt wieder die "personensichere" erste maximale Fahrgeschwindigkeit für die Transportfahrzeuge 8, da ein sicheres Anhalten vor einer Person 15 gewährleistet werden muss.

Es kann vorgesehen werden, dass die Transportfahrzeuge 8 durch Erfassung von Navigationsmarken die empfangene Fahrwegvorgabe abfahren. Diese Ausführung umfasst beispielweise auch, dass am Übergang zwischen dem erstem Fahrabschnitt 12 und zweiten Fahrabschnitt 13 Navigationsmarken 19 angeordnet sind, die vom Transportfahrzeug 8 beim Passieren erfasst werden, wodurch in Abhängigkeit von der Fahrtrichtung die erste maximale Fahrgeschwindigkeit oder die zweite maximale Fahrgeschwindigkeit festgelegt wird.

Die zusätzliche Abgrenzung 14 zwischen dem ersten Fahrabschnitt 12 und dem zweiten Fahrabschnitt 13 umfasst wiederum eine Passierzone 17, welche von den Transportfahrzeugen 8 passiert werden kann. Wie in der Fig. 2 ersichtlich, können in einer Reihe auch Arbeitsplätze 7 mit gegenseitigem Abstand angeordnet werden, sodass eine Passierzone 17 zwischen den Arbeitsplätzen 7 ausgebildet ist.

Gerade bei großräumigen Arbeitsbereichen 6 hat sich die Anordnung von mehreren Passierzonen 17 als Vorteil erwiesen, da sich das Verkehrsaufkommen der Transportfahrzeuge 8 auf mehrere Passierzonen 17 aufteilt und die Transportfahrzeuge 8 früher bzw. öfter den zweiten Fahrabschnitt 13 erreichen können. Im Bereich der Passierzonen 17 werden bevorzugt ebenfalls wieder Erfassungsmittel 18 angeordnet, um ein unbefugtes Hindurchschreiten einer Person 15 erkennen können. Wie oben beschrieben, können die Transportfahrzeuge 8 in einen Sicherheitsmodus umgeschaltet werden, sofern die Erfassungsmittel 18 eine Person 15 erfassen.

Die Fig. 3a und 3b zeigen unterschiedliche Ausführungen einer Passierzone 17, wie diese oben beschrieben wurde.

Fig. 3a zeigt eine erste Ausführung einer Passierzone 17, die dazu konfiguriert ist, nur ein Transportfahrzeug 8 passieren zu lassen. Die Passierzone(n) 17 ist in diesem Fall so gestaltet, dass in der Abgrenzung 14, insbesondere die Barriere, eine Durchfahrtsöffnung 20 zum Passieren der Transportfahrzeuge 8 vorhanden ist. Sollte eine Person 15 versuchen, die Passierzone 17 zu passieren, wird dies von einem Erfassungsmittel 18 erfasst und es werden beispielsweise die Transportfahrzeuge 8 im zweiten Fahrabschnitt 13 in einen Sicherheitsmodus umgeschaltet, daher ein Sicherheitsfahrbetrieb aktiviert. Es kann aber auch vorgesehen sein, dass bei einer Erkennung einer Zutrittsverletzung ein Not-Stopp aller Transportfahrzeuge 8 im zweiten Fahrabschnitt 13 ausgelöst wird.

Fig. 3b zeigt eine zweite Ausführung einer Passierzone 17, die dazu konfiguriert ist, ein Transportfahrzeug 8 und eine Person 15 passieren zu lassen. Die Passierzone(n) 17 ist in diesem Fall so gestaltet, dass die Abgrenzung 14, insbesondere die Barriere, eine Durchfahrtsöffnung 20 umfasst, welche im oberen Bereich durch eine physische Barriere 21 verschließbar und im unteren Bereich zum ungehinderten Passieren (Hindurchfahren) der Transportfahrzeuge 8 ausgebildet ist. Die physische Barriere 21 kann durch ein zeitweise entfernbares (abnehmbares) Gitter oder eine Tür gebildet sein.

Das Erfassungsmittel 18 kann, wie zuvor beschrieben, einen unbefugten Zutrittsversuch durch den unteren Bereich der Durchfahrtsöffnung 20 erfassen. Insbesondere wird das Erfassungsmittel 18 jedoch dazu ausgebildet sein, einen befugten Zutritt zu ermöglichen. Beispielsweise kann eine Person 15 die Barriere 21 öffnen bzw. entfernen und so einen befugten Zutritt zum zweiten Fahrabschnitt 13 erlangen. Wie bereits beschrieben, wird dann im zweiten Fahrabschnitt 13 ein Sicherheitsmodus aktiviert. Der Sicherheitsmodus wird bevorzugt durch das Schließen bzw. Anbringen der Barriere 21 wieder aufgehoben.

In den Fig. 3a und 3b ist auch eine besondere Ausführungsform eines Transportfahrzeugs 8 gezeigt. Dieses Transportfahrzeug 8 umfasst übereinander angeordnete Ladeebenen 43, auf welchen jeweils zumindest ein Ladungsträger 9 aufgenommen werden kann, sodass mit dem Transportfahrzeug 8 gleichzeitig mehrere Ladungsträger 9 transportiert werden können.

Das Transportfahrzeug 8 kann aber auch eine einzige Ladeebene 43 ausbilden, auf welcher zumindest zwei Ladungsträger 9 abgestellt werden können, sodass auch mit diesem Transportfahrzeug 8 gleichzeitig mehrere Ladungsträger 9 transportiert werden können, wie dies jedoch nicht näher dargestellt ist.

Die gleichzeitig transportierten Ladungsträger 9 können einen Quell-Ladungsträger und einen Ziel-Ladungsträger zu einem Bearbeitungsauftrag oder Quell-Ladungsträger zu verschiedenen Bearbeitungsaufträgen usw. betreffen. Mit dieser Ausführung kann die Transporteffizienz der Transportfahrzeuge 8 gesteigert werden.

Grundsätzlich kann das Transportfahrzeug 8 auch eine einzige Ladeebene 43 ausbilden, auf welcher ein einziger Ladungsträger 9 abgestellt werden kann, sodass mit diesem Transportfahrzeug 8 ausschließlich ein Ladungsträger 9 transportiert werden kann, wie dies jedoch nicht näher dargestellt ist.

Die oben beschriebenen Ausführungen des Transport- und Manipulationssystems 1 können auch verschiedene Transportfahrzeuge 8 einsetzen.

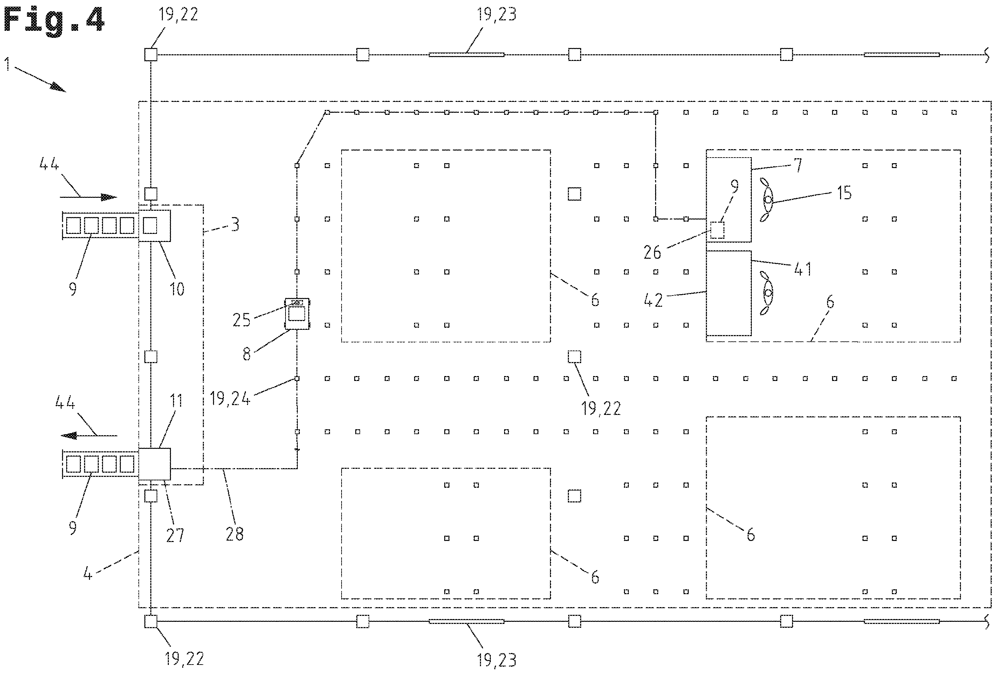

Fig. 4 zeigt eine Übersichtsdarstellung eines Transport- und Manipulationssystems 1. Das Transport- und Manipulationssystem 1 ist in einem Gebäude oder einer Halle (daher einem abgeschlossenen Raum) angeordnet. Innerhalb dieses Raumes wird der Aktionsraum 4 festgelegt. Wie bereits oben beschrieben, umfasst dieser Aktionsraum 4 zumindest einen Fahrbereich 5 und zumindest einen Arbeitsbereich 6. Aus Gründen der besseren Übersicht sind in der Fig. 4 einzelne Details, wie beispielweise die Fahrabschnitte 12, 13, die weiteren Transportfahrzeuge 8 und die weiteren Arbeitsplätze 7, nicht dargestellt.

Es ist vorgesehen, dass die Transportfahrzeuge 8 einen Transportauftrag von einem Lager-Verwaltungssystem (WMS) empfangen und entsprechend dem Transportauftrag die Ladungsträger 9 beispielweise zwischen einer Übernahmestation 10 und einem Arbeitsplatz 7, einer Übergabestation 11 und einem Arbeitsplatz 7, zwischen verschiedenen Arbeitsplätzen 7 usw. transportieren. Beispielsweise kann ein Transportauftrag für ein Transportfahrzeug 8 darin bestehen, einen Ziel-Ladungsträger 9 an einem Arbeitsplatz 7 zu übernehmen und zur Übergabestation 11 zu transportieren und dort abzugeben.

Es ist ferner vorgesehen, dass die Transportfahrzeuge 8 eine Fahrwegvorgabe 25 empfangen, und diese durch Erfassung und Auswertung von Navigationsmarken 19 abfahren. Diese Fahrwegvorgabe 25 wird vom Lager-Verwaltungssystem (WMS) oder einem Flotten-Managementsystem (FMS) ermittelt, da dieses einen Gesamtüberblick über alle sich im Fahrbereich 5 befindlichen Transportfahrzeuge 8 hat und somit einen optimalen Fahrweg planen kann. Optimal dahingehend, dass es zu möglichst wenigen Blockaden bzw. Staus kommt, was den Durchsatz verringern würde. Die Transportfahrzeuge 8 haben zwar eigene Intelligenz, um auf lokale Anforderungen, wie beispielweise eine mögliche Kollision reagieren zu können, eine Routenplanung können diese aber nicht leisten.

Um im Fahrbereich 5 navigieren zu können, sind im Fahrbereich 5 Navigationsmarken 19 vorhanden bzw. ist der Fahrbereich 5 durch Navigationsmarken 19 festgelegt.

Gemäß einer Ausführung können diese Navigationsmarken 19 durch bauliche Merkmale des umgebenden Raums, also des Gebäudes bzw. der Halle gebildet sein. Die baulichen Merkmale können beispielweise Konstruktionselemente 22 des Gebäudes sein, wie Stützkonstruktionselemente oder charakteristische bauliche Elemente des Gebäudes. Ferner können diese baulichen Merkmale auch durch Gestaltungselemente 23 gebildet sein, beispielweise durch Fenster oder Türen. Bei diesen baulichen Elementen handelt es sich um ortsfeste bauliche Elemente, welche für die autonomen Transportfahrzeuge 8 gut sichtbar sind. Die Transportfahrzeuge 8 umfassen vorzugsweise einen Sensor, insbesondere optische Sensor und eine Bildverarbeitungsvorrichtung, um in einem erfassten Abbild der Umgebung die baulichen Merkmale als Navigationsmarken zu erfassen. Zur besseren und sichereren Ermittlung der Navigationsmarken 19 im Raum ist es nach einer weiteren Ausführung von Vorteil, wenn die baulichen Merkmale eine eindeutig erfassbare und auswertbare Kennung aufweisen. Beispielsweise können die baulichen Merkmale farblich unterschiedlich gestaltet sein, sodass ein Transportfahrzeug 8 schnell und eindeutig seine Position im Raum ermitteln kann. Die baulichen Merkmale können auch durch Elemente der Arbeitsplätze 7 bzw. der Arbeitsbereiche 6 gebildet sein oder auch durch die Anzahl der abzufahrenden Arbeitsplätze 7. Gemäß dieser Ausführung können alle im Aktionsraum 4 bzw. im Gebäuderaum vorhandenen, eindeutig erkennbaren Merkmale als Navigationsmarken 19 dienen.

Es kann auch vorgesehen sein, dass die Navigationsmarken 19 durch Navigationsmerkmale 24 gebildet sind, welche im Fahrbereich 5 und gegebenenfalls auch im Arbeitsbereich 6 angeordnet sind, insbesondere gemäß einer bevorzugten Ausführung am Boden des Fahrbereichs 5 und Arbeitsbereichs 6. In der Figur 4 sind diese Navigationsmerkmale 24 nur beispielshaft in einem kleinen Bereich des Aktionsraums 4 dargestellt. Es versteht sich, dass die Navigationsmerkmale 24 in weiteren Bereichen des Aktionsraums 4 angeordnet sind bzw. sein können.

Diese Navigationsmerkmale 24 sind gemäß einer bevorzugten Ausführung durch optisch erfassbare Marken gebildet, beispielweise durch 1D- oder 2D-Codes. Damit kann das Transportfahrzeug 8 beim Abfahren des Fahrwegs stets die nächstliegenden Navigationsmerkmale 24 erfassen und den weiteren Fahrweg vorbereiten. Es kann vorgesehen sein, dass in jedem Navigationsmerkmal 24 eine absolute Position des Merkmals und/oder eine eindeutige Kennung hinterlegt ist. Dies hat den besonderen Vorteil, dass jedes Transportfahrzeug 8 ohne Rückgriff auf ein übergeordnetes Lager-Verwaltungssystem (WMS) seine Position im Aktionsraum 4 bestimmen kann.

In der vom Transportfahrzeug 8 empfangenen Fahrwegvorgabe 25 ist eine Startposition 26 und eine Zielposition 27 hinterlegt. Ferner werden Navigationsmarken 19 hinterlegt, die entlang des Fahrwegs 28 abzufahren sind. Um lokale Häufungen von Transportfahrzeugen 8 zu verhindern, kann die Fahrwegvorgabe 25 eine exakte Kette der abzufahrenden Navigationsmarken 19 vorgeben. Oder es werden nur charakteristische Navigationsmarken 19 vorgegeben, die Navigation dazwischen wird dem Transportfahrzeug 8 überlassen.

Fig. 5 zeigt eine beispielhafte Abwicklung von Bearbeitungsaufträgen mit dem Transport- und Manipulationssystem 1. In einem übergeordneten Lager-Verwaltungssystem 29 sind Aufträge 30 datentechnisch erfasst. Die Aufträge 30 können beispielweise Kundenaufträge umfassen, bei denen die (Auftrags)Waren vor dem Versand einer zusätzlichen manuellen Handlung bedürfen. Die Aufträge 30 können beispielweise auch die Retourwarenabwicklung betreffen, bei denen die (Retour)Waren vor einer Einlagerung in das Warenlager, oder vor einer erneuten Kommissionierung "aufbereitet" werden müssen.

Es kann gegebenenfalls gefordert sein, dass vor dem Versand die Waren zu Aufträgen 30 speziell zu verpacken sind, beispielweise in eine Geschenkverpackung oder in eine bruchsichere Verpackung, oder dass den Waren zu Aufträgen 30 zusätzlich ein Beipackzettel oder eine Rechnung beigefügt werden muss.

Fig. 5 ist eine stark vereinfachte Darstellung des Transport- und Manipulationssystems 1 und des von diesem durchgeführten Verfahrens, insbesondere betreffend die Abarbeitung der Aufträge 30.

Vom Lager-Verwaltungssystem (WMS) bzw. einem Flotten-Managementsystem (FMS), werden die Aufträge 30 in Auftragszeilen 31 aufgeteilt, da gegebenenfalls für jede Auftragszeile eine spezifische Behandlung erforderlich ist. Bei dieser Aufteilung wird vom Lager-Verwaltungssystem (WMS) / Flotten-Managementsystem (FMS) zumeist auch eine Reihung der Auftragszeilen durchgeführt, um das gegenständliche Transport- und Manipulationssystem 1 möglichst optimal auszulasten. Bei der Erstellung dieser Reihung wird beispielweise die aktuelle Auslastung der Arbeitsplätze 7 und der sich im Fahrbereich 5 befindlichen Transportfahrzeuge 8 berücksichtigt. Beispielsweise ist es möglich, aufgrund der Kenntnis der aktuellen Position der Transportfahrzeuge 8, deren Fahrwege 28 und damit deren Startpositionen 26 und Zielpositionen 27, die Auftragszeilen 31 so zu ordnen, dass es bei der Abarbeitung der Auftragszeilen 31 zu keiner lokalen Häufung und damit einer Blockade von Transportfahrzeugen 8 im Fahrbereich 5 kommt. Daher wird je Transportauftrag auch eine Fahrwegvorgabe 25 ermittelt. Die Fahrwegvorgabe 25 kann in den Transportauftrag integriert oder mit diesem verknüpft werden.

Vom Lager-Verwaltungssystem (WMS) / Flotten-Managementsystem (FMS) werden die Auftragszeilen 31 als Transportaufträge 33 und die Fahrwegvorgaben 25 bevorzugt mittels einer drahtlosen Kommunikationsverbindung 32 an die Transportfahrzeuge 8 übermittelt. Nach einer bevorzugten Ausführung werden die Transportaufträge 33 selektiv an spezifische Transportfahrzeuge 8 übermittelt. Durch Kenntnis der aktuellen Position der Transportfahrzeuge 8 können selektiv Transportfahrzeuge 8 angesprochen werden, die für die Aufgabe bestmöglich geeignet sind, beispielweise sich am nächsten zur Startposition 26 befinden. Nach einer möglichen Ausführung kann auch vorgesehen sein, dass die Transportaufträge 33 an alle Transportfahrzeuge 8 übermittelt werden, und es entscheiden die autonomen Transportfahrzeuge 8 mittels der eigenen Ablaufsteuerung selbständig, welches Transportfahrzeug 8 welchen Transportauftrag 33 übernimmt.

Jedes Transportfahrzeug 8 beginnt mit der Abarbeitung des übernommenen / empfangenen Transportauftrags 33. Jeder Transportauftrag 33 definiert einen Fahrweg, entlang welchem das Transportfahrzeug 8 und der von diesem transportierte Ladungsträger 9 bewegt wird.

Zu einem Transportauftrag 1.1 hat ein Transportfahrzeug 8 einen Ladungsträger 9 von der Übernahmestation 10 (Startposition) abgeholt und transportiert diesen zu einem Arbeitsplatz 7 (Zielposition), wobei das Transportfahrzeug 8 entlang eines ersten Fahrwegs 35 bewegt wird.

Zu einem Transportauftrag 3.1 hat ein Transportfahrzeug 8 einen Ladungsträger 9 an einem Arbeitsplatz 7 (Startposition) abgeholt und transportiert diesen zur Übergabestation 11 (Zielposition), wobei das Transportfahrzeug 8 entlang eines zweiten Fahrwegs 36 bewegt wird.

Wie oben beschrieben, kann ein Transportfahrzeug 8 auch dazu ausgebildet sein, mehrere Ladungsträger 9 gleichzeitig zu transportieren. Die Transportaufträge 3.2 und 3.3 werden von einem solchen Transportfahrzeug 8 bearbeitet, wobei die Transportaufträge 3.2, 3.3 darin bestehen, die Ladungsträger 9 an der Übernahmestation 10 (Startposition) aufzunehmen und vorerst den ersten Ladungsträger 9 zu einem ersten Arbeitsplatz 7 und danach den zweiten Ladungsträger 9 zu einem zweiten Arbeitsplatz 7 zu transportieren, wobei das Transportfahrzeug 8 entlang eines dritten Fahrwegs 37 bewegt wird. Erreicht das Transportfahrzeug 8 den ersten Arbeitsplatz 7 (erste Zielposition), so wird dort der erste Ladungsträger 9 auf die Stellplatzfläche 7-2 des ersten Arbeitsplatzes 7 abgegeben. Erreicht das Transportfahrzeug 8 den zweiten Arbeitsplatz 7 (zweite Zielposition), so wird dort der zweite Ladungsträger 9 auf die Stellplatzfläche 7-2 des zweiten Arbeitsplatzes 7 abgegeben.

Zu einem Transportauftrag 1.2 wird das Transportfahrzeug 8 entlang eines vierten Fahrwegs 38 bewegt, wobei dieses von einer aktuellen Position (Startposition) vorerst zu einem Arbeitsplatz 7 fährt, wo es einen Ladungsträger 9 von der Stellplatzfläche 7-3 aufnimmt, und danach vom Arbeitsplatz 7 zur Übergabestation 11 (Zielposition), um den Ladungsträger 9 vom Transportfahrzeug 8 auf die Übergabestation 11 abzugeben.

Zu einem Transportauftrag 2.1 hat ein Transportfahrzeug 8 einen Ladungsträger 9 an einem ersten Arbeitsplatz 7 (Startposition) aufgenommen und transportiert diesen zu einen zweiten Arbeitsplatz 7 (Zielposition), wobei das Transportfahrzeug 8 entlang eines fünften Fahrwegs 46 bewegt wird.

Wie nicht näher dargestellt, kann zu einem Transportauftrag auch ein Arbeitsmittel-Ladungsträger zu einem Arbeitsplatz 7 antransportiert oder von einem Arbeitsplatz 7 abtransportiert werden.

Wie ebenfalls nicht näher dargestellt, kann zu einem Transportauftrag zumindest ein leerer Ziel-Ladungsträger 9 von der Bereitstellungsstation 45 (Fig. 1, 2) übernommen und zu einem der Arbeitsplätze 7 transportiert und dort bereitgestellt werden.

Wie aus der Figur zu entnehmen ist, wurden die Fahrwege derart geplant, dass es zu keiner Häufung von Transportfahrzeugen 8 kommt, wobei gegebenenfalls eine längere Fahrstrecke in Kauf genommen wird, beispielweise bei dem fünften Fahrweg 46, um dadurch eine in Folge auftretende Blockade zu verhindern.

Das Verfahren zum Transport von Ladungsträgern 9 und zur manuellen Durchführung von Bearbeitungsaufträgen in dem Transport- und Manipulationssystem 1 umfasst gemäß obiger Ausführungen zumindest die Schritte:
- Erfassung von Transportaufträgen 33 an dem Lager-Verwaltungssystem (WMS) / Flotten-Managementsystem (FMS),
- Übermittlung der Transportaufträge 33 vom Lager-Verwaltungssystem (WMS) / Flotten-Managementsystem (FMS) an die Steuereinheiten 39 der autonomen Transportfahrzeuge 8, wobei ein Transportauftrag 33 den Fahrweg eines Transportfahrzeugs 8 zwischen einem Startpunkt 26 und einem Zielpunkt 27 innerhalb des zumindest einen Fahrbereichs 5 definiert, wobei der Startpunkt 26 an der Übernahmestation 10 oder einem der Arbeitsplätze 7 ausgebildet ist und der Zielpunkt 27 an der Übergabestation 11 oder einem der Arbeitsplätze 7 ausgebildet ist,
- Auswertung eines Startpunkts 26 und eines Zielpunkts 27 innerhalb des Fahrbereichs 5 aus dem Transportauftrag 33 für das jeweilige Transportfahrzeug 8, durch die Steuerungseinheit 39 des jeweiligen Transportfahrzeugs 8,
- Übernahme eines Ladungsträgers 9 an der Startposition 26 auf das Transportfahrzeug 8,
- Transport des Ladungsträgers 9 mit dem Transportfahrzeug 8 entlang eines durch den Transportauftrag 33 definierten Fahrwegs 28, 35, 36, 37, 38, 46 zur Zielposition 27, durch Erfassung und Auswertung von Navigationsmarken 19 an der Steuerungseinheit 39 des jeweiligen Transportfahrzeugs 8, und
- Übergabe des Ladungsträgers 9 an der Zielposition 27, insbesondere durch das Transportfahrzeug 8.

Das Transportfahrzeug 8 wird entlang dem Fahrweg im ersten Fahrabschnitt 12 mit einer ersten maximalen Fahrgeschwindigkeit und im zweiten Fahrabschnitt 13 mit einer zweiten maximalen Fahrgeschwindigkeit bewegt. Die zweite maximale Fahrgeschwindigkeit ist höher als die erste maximale Fahrgeschwindigkeit.

Die Ausführungsbeispiele zeigen mögliche Ausführungsvarianten des Transport- und Manipulationssystems, wobei an dieser Stelle bemerkt sei, dass die Erfindung nicht auf die speziell dargestellten Ausführungsvarianten derselben bzw. desselben eingeschränkt ist. Der Schutzumfang der Erfindung wird durch die Ansprüche definiert.

Der Ordnung halber sei abschließend darauf hingewiesen, dass zum besseren Verständnis der Verfahrensschritte, Zeichnungselemente teilweise unmaßstäblich und/oder vergrößert und/oder verkleinert dargestellt wurden.

**Bezugszeichenaufstellung**

| | | | |
|---|---|---|---|
| 1 | Transport- und Manipulations- system | 30 | Aufträge |
| | | 31 | Auftragszeilen |
| 2 | Ladungsträger-Fördersystem | 32 | Kommunikationsverbindung |
| 3 | Andienungsvorrichtung | | |
| 4 | Aktionsraum | 33 | Transportauftrag |
| 5 | Fahrbereich | 34 | Startposition |
| | | 35 | erster Fahrweg |
| 6 | Arbeitsbereich | 36 | zweiter Fahrweg |
| 7 | Arbeitsplatz | 37 | dritter Fahrweg |
| 7-1 | Arbeitstisch | | |
| 7-2 | Stellplatzfläche | 38 | vierter Fahrweg |
| 7-3 | Stellplatzfläche | 39 | Steuerungseinheit |
| | | 40 | Bereitstellplatz |
| 7-4 | Benutzerschnittstelle | 41 | erste Seite |
| 7-5 | Anliefervorrichtung | 42 | zweite Seite |
| 7-6 | Abliefervorrichtung | | |
| 7-7 | Umsetzvorrichtung | 43 | Ladeebene |
| 7-8 | Umsetzvorrichtung | 44 | Pfeil |
| | | 45 | Bereitstellungsstation |
| 8 | Transportfahrzeug | 46 | fünfter Fahrweg |
| 9 | Ladungsträger | | |
| 10 | Übernahmestation | | |
| 11 | Übergabestation | | |
| 12 | erster Fahrabschnitt | | |
| 13 | zweiter Fahrabschnitt | | |
| 14 | Abgrenzung | | |
| 15 | Person / Bediener | | |
| 16 | Fahrweg | | |
| 17 | Passierzone | | |
| 18 | Erfassungsmittel | | |
| 19 | Navigationsmarke | | |
| 20 | Durchfahrtsöffnung | | |
| 21 | Barriere | | |
| 22 | Konstruktionselement | | |
| 23 | Gestaltungselement | | |
| 24 | Navigationsmerkmal | | |
| 25 | Fahrwegvorgabe | | |
| 26 | Startposition | | |
| 27 | Zielposition | | |
| 28 | Fahrweg | | |
| 29 | Lager-Verwaltungssystem (WMS) | | |
| | | | |

## Patentansprüche

1. Transport- und Manipulationssystem (1) mit
- einem Lager-Verwaltungssystem (29),
- einer Mehrzahl von autonomen Transportfahrzeugen (8),
- zumindest einem Aktionsraum (4), in welchem eine Andienungsvorrichtung (3) angeordnet ist, die eine Übernahmestation (10) und eine Übergabestation (11) aufweist, welcher Aktionsraum (4)
- zumindest einen Arbeitsbereich (6), in welchem eine Mehrzahl statischer Arbeitsplätze (7) zur manuellen Durchführung von Bearbeitungsaufträgen durch Personen (15) angeordnet sind, und
- zumindest einen Fahrbereich (5), in welchem sich die Mehrzahl von autonomen Transportfahrzeugen (8) bewegen können und welche die Andienungsvorrichtung (3) mit den Arbeitsplätzen (7) fördertechnisch verbinden,
umfasst,
wobei an der Übernahmestation (10) von einem autonomen Transportfahrzeug (8) ein Quell-Ladungsträger (9) übernommen werden kann,
wobei an der Übergabestation (11) von einem autonomen Transportfahrzeug (8) ein Ziel-Ladungsträger (9) übergeben werden kann,
wobei die Transportfahrzeuge (8) je eine Steuerungseinheit (39) aufweisen, welche Steuerungseinheit (39) dazu ausgebildet ist, Transportaufträge von dem Lager-Verwaltungssystem (29) zu empfangen und auszuwerten,
wobei die Transportfahrzeuge (8) gemäß diesen Transportaufträgen automatisch und autonom angesteuert werden, indem zumindest
- zu einem ersten Transportauftrag der Transportaufträge, ein Quell-Ladungsträger (9) an der Übernahmestation (10) übernommen, zu einem der Arbeitsplätze (7) transportiert und dort bereitgestellt wird, um anschließend einen Bearbeitungsauftrag an diesem Arbeitsplatz (7) durchzuführen, und
- zu einem zweiten Transportauftrag der Transportaufträge, ein Ziel-Ladungsträger (9) an einem der Arbeitsplätze (7) übernommen, zur Übergabestation (11) transportiert und dort abgegeben wird, nachdem ein Bearbeitungsauftrag an diesem Arbeitsplatz (7) abgeschlossen wurde,
und wobei jedes Transportfahrzeug (8) ferner dazu ausgebildet ist, eine Fahrwegvorgabe (25) zu empfangen, und durch Erfassung und Auswertung von Navigationsmarken (19) selbständig die Fahrwegvorgabe (25) abzufahren,
**dadurch gekennzeichnet, dass**
- der Fahrbereich (5) einen ersten Fahrabschnitt (12) und einen zweiten Fahrabschnitt (13) aufweist, wobei der erste Fahrabschnitt (12) in den zumindest einen Arbeitsbereich (6) hineinragt,
- im ersten Fahrabschnitt (12) eine erste maximale Fahrgeschwindigkeit festgelegt ist, insbesondere eine personensichere erste maximale Fahrgeschwindigkeit,
- im zweiten Fahrabschnitt (13) eine zweite maximale Fahrgeschwindigkeit festgelegt ist, wobei die zweite maximale Fahrgeschwindigkeit höher ist als die erste maximale Fahrgeschwindigkeit,
wobei der zweite Fahrabschnitt (13) gegenüber dem ersten Fahrabschnitt (12) durch eine Abgrenzung (14) abgegrenzt ist, welche von den Transportfahrzeugen (8) an zumindest einer vorbestimmten Passierzone (17) passiert werden kann und durch einen Personen-Zutrittsschutz gebildet ist,
wobei der Personen-Zutrittsschutz eine Überwachungsvorrichtung aufweist, die dazu ausgebildet ist, einen Zutritt der Person (15) in den zweiten Fahrabschnitt (13) durch Passieren des Personen-Zutrittsschutz zu erkennen,
und wobei die Steuerungseinheit (39) des jeweiligen Transportfahrzeuges (8) dazu eingerichtet ist, die Fahrgeschwindigkeit zu regeln, sodass die vorgegebenen maximalen Fahrgeschwindigkeiten eingehalten werden.

2. Transport- und Manipulationssystem nach Anspruch 1, **dadurch gekennzeichnet, dass** die Übernahmestation (10) und/oder die Übergabestation (11) der Andienungsvorrichtung (3) über ein Ladungsträger-Fördersystem (2) mit zumindest einem aus der Gruppe von Warenlager zur Lagerung von Waren mit den Ladungsträgern (9), Kommissioniersystem mit einem oder mehreren Kommissionierarbeitsplätzen, Wareneingang oder Warenausgang verbunden ist.

3. Transport- und Manipulationssystem nach Anspruch 1, **dadurch gekennzeichnet, dass** die Steuerungseinheit (39) ein Speichermittel umfasst, in welchem eine Karte der Navigationsmarken (19) hinterlegt ist.

4. Transport- und Manipulationssystem nach Anspruch 1 oder 3, **dadurch gekennzeichnet, dass** die Steuerungseinheit (39) ein Speichermittel umfasst, in welchem eine Karte des zumindest einen Fahrbereichs (5) und/oder des zumindest einen Arbeitsbereichs (6) hinterlegt ist.

5. Transport- und Manipulationssystem nach Anspruch 1, **dadurch gekennzeichnet, dass** der statische Arbeitsplatz (7) einen Arbeitstisch (7-1), eine Stellplatzfläche (7-2) zur Pufferung zumindest eines Quell-Ladungsträgers (9), eine Stellplatzfläche (7-3) zur Pufferung zumindest eines Ziel-Ladungsträgers (9) und/oder eine Benutzerschnittstelle (7-4) mit einer Ausgabevorrichtung und/oder einer Eingabevorrichtung aufweist und dass durch die Ausgabevorrichtung der Benutzerschnittstelle (7-4) die Person (15) angewiesen wird, gemäß dem Bearbeitungsauftrag einen Bearbeitungsschritt an der Ware vorzunehmen, welche aus dem Quell-Ladungsträger (9) entnommenen wird, und dass durch die Eingabevorrichtung der Benutzerschnittstelle (7-4) die Person (15) angewiesen wird, einen Bearbeitungsschritt zu bestätigen.

6. Transport- und Manipulationssystem nach einem der Ansprüche 1 bis 5, **dadurch gekennzeichnet, dass** der statische Arbeitsplatz (7) zumindest einen Bereitstellplatz (40) für Arbeitsmittel aufweist, auf welchem, insbesondere durch ein Transportfahrzeug (8), in einem initialen Konfigurationsschritt Arbeitsmittel bereitgestellt werden.

7. Transport- und Manipulationssystem nach Anspruch 6, **dadurch gekennzeichnet, dass** die Steuerungseinheit (39) der Transportfahrzeuge (8) ferner dazu ausgebildet ist, Transportaufträge von dem Lager-Verwaltungssystem (29) zu empfangen und auszuwerten, wobei die Transportfahrzeuge (8) gemäß diesen Transportaufträgen automatisch und autonom angesteuert werden, indem zu einem dritten Transportauftrag der Transportaufträge ein Arbeitsmittel-Ladungsträger zu genanntem Arbeitsplatz (7) antransportiert oder von genanntem Arbeitsplatz (7) abtransportiert wird.

8. Transport- und Manipulationssystem nach einem der Ansprüche 1 bis 7, **dadurch gekennzeichnet, dass** der Arbeitsplatz (7) ortsvariabel ausgebildet ist.

9. Transport- und Manipulationssystem nach Anspruch 1 oder 3, **dadurch gekennzeichnet, dass** in jeder Navigationsmarke (19) eine eindeutige Identifikationskennung hinterlegt ist.

10. Transport- und Manipulationssystem nach einem der Ansprüche 1 bis 9, **dadurch gekennzeichnet, dass** die Fahrwegvorgabe (25) einen Startpunkt (26) und einen Zielpunkt (27) innerhalb des Fahrbereiches (5) und/oder eine Mehrzahl von Navigationsmarken (19) umfasst, die durch das Transportfahrzeug (8) abzufahren sind.

11. Transport- und Manipulationssystem nach einem der Ansprüche 1 bis 7, **dadurch gekennzeichnet, dass** die Steuerungseinheit (39) der Transportfahrzeuge (8) ferner dazu ausgebildet ist, Transportaufträge von dem Lager-Verwaltungssystem (29) zu empfangen und auszuwerten, wobei die Transportfahrzeuge (8) gemäß diesen Transportaufträgen automatisch und autonom angesteuert werden, indem zu einem vierten Transportauftrag der Transportaufträge ein Quell-Ladungsträger (9) und/oder ein Ziel-Ladungsträger (9) zwischen einem ersten Arbeitsplatz (7) und einem zweiten Arbeitsplatz (7) transportiert wird / werden, wobei für einen vierten Transportauftrag der Startpunkt (26) und Zielpunkt (27) durch den ersten Arbeitsplatz (7) und zweiten Arbeitsplatz (7) gebildet sind.

12. Transport- und Manipulationssystem nach einem der Ansprüche 1 bis 11, **dadurch gekennzeichnet, dass** im Quell-Ladungsträger (9) Ware zu einem einzigen Bearbeitungsauftrag vorhanden ist, oder dass im Quell-Ladungsträger (9) Ware zu einer Mehrzahl von Bearbeitungsaufträgen vorhanden ist.

13. Transport- und Manipulationssystem nach Anspruch 1, **dadurch gekennzeichnet, dass** der Arbeitsplatz (7) einen Arbeitstisch (7-1) mit einer dem Bediener (15) zugewandten ersten Seite (41) und einer dem zweiten Fahrabschnitt (13) zugewandten zweiten Seite (42) aufweist, wobei die zweite Seite (42) die Abgrenzung (14) bildet.

14. Transport- und Manipulationssystem nach Anspruch 1, **dadurch gekennzeichnet, dass** zumindest eines der Transportfahrzeuge (8) eine einzige Ladeebene (43) ausbildet, auf welcher zumindest zwei Ladungsträger (9) abgestellt werden können, oder übereinander angeordnete Ladeebenen (43) ausbildet, auf welchen jeweils zumindest ein Ladungsträger (9) aufgenommen werden kann, sodass mit dem zumindest einen Transportfahrzeug (8) gleichzeitig mehrere Ladungsträger (9) transportiert werden können.

15. Transport- und Manipulationssystem nach einem der Ansprüche 1 bis 11, **dadurch gekennzeichnet, dass** die Steuerungseinheit (39) der Transportfahrzeuge (8) ferner dazu ausgebildet ist, Transportaufträge von dem Lager-Verwaltungssystem (29) zu empfangen und auszuwerten, wobei die Transportfahrzeuge (8) gemäß diesen Transportaufträgen automatisch und autonom angesteuert werden, indem zu einem fünften Transportauftrag der Transportaufträge zumindest ein Ziel-Ladungsträger (9), insbesondere ein leerer Ziel-Ladungsträger, an einer das Transport- und Manipulationssystem (1) umfassenden Bereitstellungsstation (45) übernommen und zu einem der Arbeitsplätze (7) transportiert und dort bereitgestellt wird, um anschließend einen Bearbeitungsauftrag an diesem Arbeitsplatz (7) durchzuführen.

16. Verfahren zum Transport von Ladungsträgern (9) und zur manuellen Durchführung von Bearbeitungsaufträgen in einem Transport- und Manipulationssystem (1), insbesondere nach einem der Ansprüche 1 bis 15, welches zumindest einen Aktionsraum (4) ausbildet, in welchem eine Andienungsvorrichtung (3) angeordnet ist, die eine Übernahmestation (10) und eine Übergabestation (11) aufweist, und
welcher Aktionsraum
- zumindest einen Arbeitsbereich (6), in welchem eine Mehrzahl statischer Arbeitsplätze (7) zur manuellen Durchführung von Bearbeitungsaufträgen durch Personen angeordnet sind, und
- zumindest einen Fahrbereich (5), in welchem sich eine Mehrzahl von autonomen Transportfahrzeugen (8) bewegen können und welche die Andienungsvorrichtung (3) mit den Arbeitsplätzen (7) fördertechnisch verbinden,
aufweist, umfassend die Schritte:
- Erfassung von Transportaufträgen (33) an einem Lager-Verwaltungssystem (29);
- Übermittlung der Transportaufträge (33) vom Lager-Verwaltungssystem (29) an Steuereinheiten (39) der autonomen Transportfahrzeuge (8), wobei ein Transportauftrag (33) den Fahrweg eines Transportfahrzeugs (8) zwischen einem Startpunkt (26) und einem Zielpunkt (27) innerhalb des zumindest einen Fahrbereichs (5) definiert, wobei der Startpunkt (26) an der Übernahmestation (10) oder einem der Arbeitsplätze (7) ausgebildet ist und der Zielpunkt (27) an der Übergabestation (11) oder einem der Arbeitsplätze (7) ausgebildet ist;
- Auswertung eines Startpunkts (26) und eines Zielpunkts (27) innerhalb des Fahrbereichs (5) aus dem Transportauftrag (33) für das jeweilige Transportfahrzeug (8), durch die Steuerungseinheit (39) des jeweiligen Transportfahrzeugs (8);
- Übernahme eines Ladungsträgers (9) an der Startposition (26) auf das Transportfahrzeug (8);
- Transport des Ladungsträgers (9) mit dem Transportfahrzeug (8) entlang eines durch den Transportauftrag (33) definierten Fahrwegs zur Zielposition (27) durch Erfassung und Auswertung von Navigationsmarken (19) an der Steuerungseinheit (39) des jeweiligen Transportfahrzeugs (8);
- Übergabe des Ladungsträgers (9) an der Zielposition (27);
**dadurch gekennzeichnet, dass**
- das Transportfahrzeug (8) von der Steuerungseinheit (39) gesteuert wird,
- das Transportfahrzeug (8) entlang dem Fahrweg in einem ersten Fahrabschnitt (12) mit einer ersten maximalen Fahrgeschwindigkeit und in einem zweiten Fahrabschnitt (13) mit einer zweiten maximalen Fahrgeschwindigkeit bewegt wird, wobei die zweite maximale Fahrgeschwindigkeit höher ist als die erste maximale Fahrgeschwindigkeit,
- der zweite Fahrabschnitt (13) gegenüber dem ersten Fahrabschnitt (12) durch eine Abgrenzung (14) abgegrenzt ist, welche von den Transportfahrzeugen (8) an zumindest einer vorbestimmten Passierzone (17) passiert werden kann, und
- bei einem Zutritt der Person (15) vom ersten Fahrabschnitt (12) in den zweiten Fahrabschnitt (13) durch Passieren der Abgrenzung (14) die zweite maximale Fahrgeschwindigkeit auf gleich der ersten maximalen Fahrgeschwindigkeit festgelegt wird.

17. Verfahren zum Transport von Ladungsträgern und zur manuellen Durchführung von Bearbeitungsaufträgen nach Anspruch 16, **dadurch gekennzeichnet, dass** in einem Konfigurationsschritt der zumindest eine Fahrbereich (5) und/oder der zumindest eine Arbeitsbereich (6) innerhalb des Aktionsraums (4) festgelegt wird, insbesondere durch Zuordnung der Navigationsmarken (19) zu dem zumindest einen Fahrbereich (5) und/oder zumindest einen Arbeitsbereich (6).

## Claims

1. A transport and manipulation system (1) comprising
- a warehouse management system (29),
- a plurality of autonomous transport vehicles (8),
- at least one activity area (4), in which a provisioning device (3) is arranged, which comprises a takeover station (10) and a handover station (11),
which activity area (4) comprises
- at least one working area (6), in which a plurality of static workstations (7) for manually carrying out processing orders by persons (15) are arranged, and
- at least one travel area (5), in which the plurality of autonomous transport vehicles (8) can move and which connect the provisioning device (3) with the workstations (7) in terms of conveyance,
wherein at the takeover station (10), a source load carrier (9) can be picked from an autonomous transport vehicle (8),
wherein at the handover station (11), a target load carrier (9) can be deposited from an autonomous transport vehicle (8),
wherein the transport vehicles (8) each have a control unit (39), which control unit (39) is configured for receiving and evaluating transport orders from the warehouse management system (29),
wherein the transport vehicles (8) are automatically and autonomously controlled in accordance with the transport orders and in such a manner that
- a source load carrier (9) is picked at the takeover station (10), transported to one of the workstations (7) and provisioned there, at least for a first transport order of the transport orders, in order to subsequently carry out the processing order at the workstation (7), and
- a target load carrier (9) is picked at one of the workstations (7), transported to the handover station (11) and deposited there, at least for a second transport order of the transport orders, after the processing order has been completed at the workstation (7), and wherein each transport vehicle (8) is further configured for receiving a travel path specification (25) and independently following the travel path specification (25) by capturing and evaluating navigation markers (19),
**characterized in that**
- the travel area (5) has a first travel section (12) and a second travel section (13), wherein the first travel section (12) protrudes into the at least one working area (6),
- in the first travel section (12), a first maximum travel speed is defined, in particular a first maximum travel speed which is safe for persons,
- in the second travel section (13), a second maximum travel speed is defined, wherein the second maximum travel speed is higher than the first maximum travel speed, wherein the second travel section (13) is bounded against the first travel section (12) by a boundary (14) which can be passed by the transport vehicles (8) at at least one predetermined passing zone (17) and is formed by a person access protection, wherein the person access protection comprises a monitoring device, which is configured for identifying an access by the person (15) to the second travel section (13) by passing the person access protection,
and wherein the control unit (39) of each transport vehicle (8) is adapted for controlling the travel speed such that the specified maximum travel speeds are observed.

2. The transport and manipulation system according to claim 1, **characterized in that** the takeover station (10) and/or the handover station (11) of the provisioning device (3) is connected, via a load carrier conveying system (2), with at least one from the group of article storage for storing articles in the load carriers (9), picking system having one or multiple picking workstations, article receiving area or article issue area.

3. The transport and manipulation system according to claim 1, **characterized in that** the control unit (39) comprises a memory means in which a map of the navigation markers (19) is stored.

4. The transport and manipulation system according to claim 1 or 3, **characterized in that** the control unit (39) comprises a memory means in which a map of the at least one travel area (5) and/or of the at least one working area (6) is stored.

5. The transport and manipulation system according to claim 1, **characterized in that** the static workstation (7) comprises a work desk (7-1), a holding area (7-2) for buffering at least one source load carrier (9), a holding area (7-3) for buffering at least one target load carrier (9) and/or a user interface (7-4) having an output device and/or an input device, and that the person (15) is instructed, via the output device of the user interface (7-4), to perform a processing step in accordance with the processing order on the article(s) which is/are removed from the source load carrier (9), and that the person (15) is instructed, via the input device of the user interface (7-4), to confirm a processing step.

6. The transport and manipulation system according to one of claims 1 to 5, **characterized in that** the static workstation (7) has at least one provisioning area (40) for working means, on which working means are provisioned in an initial configuration step, in particular by a transport vehicle (8).

7. The transport and manipulation system according to claim 6, **characterized in that** the control unit (39) of the transport vehicles (8) is further configured for receiving and evaluating transport orders from the warehouse management system (29), wherein the transport vehicles (8) are automatically and autonomously controlled in accordance with these transport orders by a working means load carrier being transported to said workstation (7), or transported away from said workstation (7), for a third transport order of the transport orders.

8. The transport and manipulation system according to one of claims 1 to 7, **characterized in that** the workstation (7) is configured with a variable position.

9. The transport and manipulation system according to claim 1 or 3, **characterized in that** a unique identifier is stored in each navigation marker (19).

10. The transport and manipulation system according to one of claims 1 to 9, **characterized in that** the travel path specification (25) comprises a start point (26) and a target point (27) inside the travel area (5) and/or a plurality of navigation markers (19) which are to be followed by the transport vehicle (8).

11. The transport and manipulation system according to one of claims 1 to 7, **characterized in that** the control unit (39) of the transport vehicles (8) is further configured for receiving and evaluating transport orders from the warehouse management system (29), wherein the transport vehicles (8) are automatically and autonomously controlled in accordance with these transport orders by a source load carrier (9) and/or a target load carrier (9) being transported between a first workstation (7) and a second workstation (7), for a fourth transport order of the transport orders, wherein the start point (26) and target point (27) for a fourth transport order are formed by the first workstation (7) and second workstation (7).

12. The transport and manipulation system according to one of claims 1 to 11, **characterized in that** article(s) for a single processing order is/are located in the source load carrier (9), or that article(s) for a plurality of processing orders is/are located in the source load carrier (9).

13. The transport and manipulation system according to claim 1, **characterized in that** the workstation (7) comprises a work desk (7-1) having a first side (41) facing the operator (15) and a second side (42) facing the second travel section (13), wherein the second side (42) forms the boundary (14).

14. The transport and manipulation system according to claim 1, **characterized in that** at least one of the transport vehicles (8) forms a single loading plane (43), on which at least two load carriers (9) can be deposited, or forms loading planes (43) arranged on top of one another, on which respectively at least one load carrier (9) can be received, so that multiple load carriers (9) can be transported simultaneously with the at least one transport vehicle (8).

15. The transport and manipulation system according to one of claims 1 to 11, **characterized in that** the control unit (39) of the transport vehicles (8) is further configured for receiving and evaluating transport orders from the warehouse management system (29), wherein the transport vehicles (8) are automatically and autonomously controlled in accordance with these transport orders by at least one target load carrier (9), in particular an empty target load carrier, being picked at one of the provisioning stations (45) comprising the transport and manipulation system (1) and transported to one of the workstations (7) and provisioned there, for a fifth transport order of the transport orders, in order to subsequently carry out a processing order at this workstation (7).

16. A method for transporting load carriers (9) and for manually carrying out processing orders in a transport and manipulation system (1), in particular according to one of claims 1 to 15, which comprises at least one activity area (4), in which a provisioning device (3) is arranged, which comprises a takeover station (10) and a handover station (11), and
which activity area comprises
- at least one working area (6), in which a plurality of static workstations (7) for manually carrying out processing orders by persons are arranged, and
- at least one travel area (5), in which a plurality of autonomous transport vehicles (8) can move and which connect the provisioning device (3) with the workstations (7) in terms of conveyance,
comprising the steps:
- acquiring transport orders (33) at a warehouse management system (29);
- transmitting the transport orders (33) from the warehouse management system (29) to control units (39) of the autonomous transport vehicles (8), wherein a transport order (33) defines the travel path of a transport vehicle (8) between a start point (26) and a target point (27) inside the at least one travel area (5), wherein the start point (26) is formed at the takeover station (10) or one of the workstations (7) and the target point (27) is formed at the handover station (11) or one of the workstations (7);
- evaluating a start point (26) and a target point (27) inside the travel area (5) from the transport order (33) for the respective transport vehicle (8), by the control unit (39) of the respective transport vehicle (8);
- picking up a load carrier (9) onto the transport vehicle (8) at the start position (26);
- transporting the load carrier (9) to the target position (27) along a travel path defined by the transport order (33) using the transport vehicle (8) by capturing and evaluating navigation markers (19) at the control unit (39) of the respective transport vehicle (8);
- depositing the load carrier (9) at the target position (27);
**characterized in that**
- the transport vehicle (8) is controlled by the control unit (39),
- the transport vehicle (8) is moved along the travel path at a first maximum travel speed in a first travel section (12) and at a second maximum travel speed in a second travel section (13), wherein the second maximum travel speed is higher than the first maximum travel speed,
- the second travel section (13) is bounded against the first travel section (12) by a boundary (14) which can be passed by the transport vehicles (8) at at least one predetermined passing zone (17), and
- upon the person (15) accessing the second travel section (13) from the first travel section (12) by passing the boundary (14), the second maximum travel speed is defined as equal to the first maximum travel speed.

17. The method for transporting load carriers and for manually carrying out processing orders according to claim 16, **characterized in that** the at least one travel area (5) and/or the at least one working area (6) is defined inside the activity area (4) in a configuration step, in particular by allocation of navigation markers (19) to the at least one travel area (5) and/or at least one working area (6).

## Revendications

1. Système de transport et de manipulation (1) doté
- d'un système de gestion d'entrepôt (29),
- d'une pluralité de véhicules de transport autonomes (8),
- d'au moins un espace d'action (4), dans lequel est agencé un dispositif de distribution (3) qui présente un poste de prise en charge (10) et un poste de transfert (11), dont l'espace d'action (4)
- comprend au moins une zone de travail (6) dans laquelle sont agencés plusieurs postes de travail statiques (7) pour l'exécution manuelle d'ordres de traitement par des personnes (15), et
- au moins une zone de déplacement (5) dans laquelle peut se déplacer la pluralité de véhicules de transport autonomes (8), qui relient le dispositif de mise à disposition (3) aux postes de travail (7) au moyen d'une technologie de convoyeur, un support de charge source (9) pouvant être pris en charge au poste de prise en charge (10) par un véhicule de transport autonome (8),
un support de charge cible (9) pouvant être remis au poste de transfert (11) par un véhicule de transport autonome (8),
les véhicules de transport (8) présentant chacun une unité de commande (39), laquelle unité de commande (39) est conçue pour recevoir et évaluer les ordres de transport du système de gestion d'entrepôt (29),
les véhicules de transport (8) étant commandés automatiquement et de manière autonome conformément à ces ordres de transport,
- en ce sens qu'au moins pour un premier ordre de transport parmi les ordres de transport, un support de charge source (9) est pris en charge au poste de prise en charge (10), transporté vers l'un des postes de travail (7) et mis à disposition à cet endroit afin de permettre l'exécution d'un ordre de traitement au niveau de ce poste de travail (7), et
- pour un deuxième ordre de transport parmi les ordres de transport, un support de charge cible (9) est pris en charge à l'un des postes de travail (7) et transporté jusqu'au poste de transfert (11) pour y être livré après l'exécution d'un ordre de traitement sur ce poste de travail (7),
et dans lequel chaque véhicule de transport (8) est en outre conçu pour recevoir une spécification d'itinéraire (25) et pour suivre de manière autonome la spécification d'itinéraire (25) en détectant et en évaluant des données de navigation (19), **caractérisé en ce que**
- la zone de déplacement (5) présente une première section de déplacement (12) et une deuxième section de déplacement (13), la première section de déplacement (12) faisant saillie dans au moins une zone de travail (6),
- une première vitesse de conduite maximale est définie dans la première section de déplacement (12), en particulier une première vitesse de conduite maximale sûre pour les personnes,
- une seconde vitesse de conduite maximale est définie dans la deuxième section de déplacement (13), la deuxième vitesse de conduite maximale étant supérieure à la première vitesse de conduite maximale,
la deuxième section de déplacement (13) étant délimitée par rapport à la première section de déplacement (12) par une délimitation (14) qui peut être franchie par les véhicules de transport (8) au niveau d'au moins une zone de passage prédéterminée (17) et est constituée d'une protection d'accès personnelle,
la protection d'accès personnelle présentant un dispositif de surveillance qui est conçu pour détecter l'entrée de la personne (15) dans la deuxième section de déplacement (13) lorsqu'elle passe la protection d'accès personnelle,
et l'unité de commande (39) du véhicule de transport respectif (8) étant configurée pour réguler la vitesse de conduite de sorte que les vitesses de conduite maximales spécifiées soient respectées.

2. Système de transport et de manipulation selon la revendication 1, **caractérisé en ce que** le poste de prise en charge (10) et/ou le poste de transfert (11) du dispositif de mise à disposition (3) est relié via un système de convoyeur de support de charge (2) à un ou plusieurs groupes de travail parmi les suivants : entrepôt de marchandises pour le stockage de marchandises avec les supports de charge (9), système de préparation de commandes avec un ou plusieurs postes de travail de préparation de commandes, entrée de marchandises ou sortie de marchandises.

3. Système de transport et de manipulation selon la revendication 1, **caractérisé en ce que** l'unité de commande (39) comprend un moyen de stockage dans lequel est stockée une carte des balises de navigation (19).

4. Système de transport et de manipulation selon la revendication 1 ou 3, **caractérisé en ce que** l'unité de commande (39) comprend un moyen de stockage dans lequel est stockée une carte d'au moins une zone de déplacement (5) et/ou d'au moins une zone de travail (6).

5. Système de transport et de manipulation selon la revendication 1, **caractérisé en ce que** le poste de travail statique (7) comporte une table de travail (7-1), une surface de stationnement (7-2) pour tamponner au moins un support de charge source (9), une surface de stationnement (7-3) pour tamponner au moins un support de charge cible (9) et/ou une interface utilisateur (7-4) avec un dispositif de sortie et/ou un dispositif d'entrée et **en ce que** le dispositif de sortie de l'interface utilisateur (7-4) donne à la personne (15) la consigne d'effectuer, conformément à l'ordre de traitement, une étape de traitement des marchandises qui sont retirées du support de charge source (9), et **en ce que** le dispositif d'entrée de l'interface utilisateur (7-4) donne à la personne (15) la consigne d'effectuer une étape du traitement.

6. Système de transport et de manipulation selon l'une des revendications 1 à 5, **caractérisé en ce que** le poste de travail statique (7) présente au moins une zone de mise à disposition (40) pour les équipements de travail, sur laquelle sont agencés des équipements de travail, notamment par un véhicule de transport (8), dans une première étape de configuration.

7. Système de transport et de manipulation selon la revendication 6, **caractérisé en ce que** l'unité de commande (39) des véhicules de transport (8) est en outre conçue pour recevoir et évaluer les ordres de transport du système de gestion d'entrepôt (29), les véhicules de transport (8) étant commandés automatiquement et de manière autonome conformément à ces ordres de transport, un support de charge d'outil de travail étant transporté vers ledit poste de travail (7) ou éloigné dudit poste de travail (7) pour un troisième ordre de transport parmi les ordres de transport.

8. Système de transport et de manipulation selon l'une des revendications 1 à 7, **caractérisé en ce que** le poste de travail (7) est conçu à emplacement variable.

9. Système de transport et de manipulation selon la revendication 1 ou 3, **caractérisé en ce qu'**un code d'identification unique est stocké dans chaque balise de navigation (19).

10. Système de transport et de manipulation selon l'une des revendications 1 à 9, **caractérisé en ce que** la spécification d'itinéraire (25) comprend un point de départ (26) et un point d'arrivée (27) à l'intérieur de la zone de déplacement (5) et/ou une pluralité de balises de navigation (19) qui doivent être parcourues par le véhicule de transport (8).

11. Système de transport et de manipulation selon l'une des revendications 1 à 7, **caractérisé en ce que** l'unité de commande (39) des véhicules de transport (8) est en outre conçue pour recevoir et évaluer les ordres de transport du système de gestion d'entrepôt (29), les véhicules de transport (8) étant commandés automatiquement et de manière autonome conformément à ces ordres de transport dans lequel un support de charge source (9) et/ou un support de charge cible (9) est/sont transporté(s) pour un quatrième ordre de transport parmi les ordres de transport entre un premier poste de travail (7) et un deuxième poste de travail (7), le point de départ (26) et le point d'arrivée (27) étant constitués du premier poste de travail (7) et du deuxième poste de travail (7).

12. Système de transport et de manipulation selon l'une des revendications 1 à 11, **caractérisé en ce que** des marchandises pour un seul ordre de traitement sont présentes dans le support de charge source (9) ou **en ce que** des marchandises pour plusieurs ordres de traitement sont présentes dans le support de charge source (9).

13. Système de transport et de manipulation selon la revendication 1, **caractérisé en ce que** le poste de travail (7) comporte une table de travail (7-1) avec un premier côté (41) tourné vers l'opérateur (15) et un deuxième côté (42) tourné vers la deuxième section de déplacement (13), le deuxième côté (42) formant la délimitation (14).

14. Système de transport et de manipulation selon la revendication 1, **caractérisé en ce qu'**au moins un des véhicules de transport (8) forme un seul niveau de chargement (43) sur lequel au moins deux supports de charge (9) peuvent être placés, ou forme plusieurs niveaux de chargement (43) agencés les uns au-dessus des autres sur lesquels au moins un support de charge (9) peut être logé, de sorte que plusieurs supports de charge (9) peuvent être transportés en même temps avec au moins un véhicule de transport (8).

15. Système de transport et de manipulation selon l'une des revendications 1 à 11, **caractérisé en ce que** l'unité de commande (39) des véhicules de transport (8) est en outre conçue pour recevoir et évaluer les ordres de transport du système de gestion d'entrepôt (29), les véhicules de transport (8) étant commandés automatiquement et de manière autonome conformément à ces ordres de transport avec, pour un cinquième ordre de transport parmi les ordres de transport, au moins un support de charge cible (9), en particulier un support de charge cible vide, pris en charge à un poste de mise à disposition (45) comprenant le système de transport et de manipulation (1) et déposé et mis à disposition à l'un des postes de travail (7) pour permettre l'exécution d'un ordre de traitement à ce poste de travail (7).

16. Procédé pour transporter des supports de charge (9) et pour exécuter manuellement des ordres de traitement dans un système de transport et de manipulation (1), notamment selon l'une des revendications 1 à 15, qui présente au moins un espace d'action (4) dans lequel est agencé un dispositif de mise à disposition (3) qui comporte un poste de prise en charge (10) et un poste de transfert (11), et
dont l'espace d'action
- présente au moins une zone de travail (6), dans laquelle sont agencés une pluralité de postes de travail statiques (7) pour l'exécution manuelle de commandes de traitement par des personnes, et
- au moins une zone de déplacement (5), dans laquelle peut être agencée une pluralité de véhicules de transport autonomes (8) et qui relie le dispositif de mise à disposition (3) aux postes de travail (7) au moyen d'une technologie de convoyeur, comprenant les étapes suivantes :
- Enregistrement des ordres de transport (33) sur un système de gestion d'entrepôt (29) ;
- Transmission des ordres de transport (33) du système de gestion d'entrepôt (29) aux unités de commande (39) des véhicules de transport autonomes (8), un ordre de transport (33) définissant l'itinéraire d'un véhicule de transport (8) entre un point de départ (26) et un point d'arrivée (27) définis dans une zone de déplacement (5) au moins, le point de départ (26) étant conçu au niveau du poste de prise en charge (10) ou de l'un des postes de travail (7) et le point d'arrivée (27) étant formé au niveau du poste de transfert (11) ou de l'un des postes de travail (7) ;
- Évaluation d'un point de départ (26) et d'un point d'arrivée (27) dans la zone de déplacement (5) à partir de l'ordre de transport (33) pour le véhicule de transport (8) concerné, par l'unité de commande (39) du véhicule de transport concerné (8) ;
- Réception d'un support de charge (9) sur le véhicule de transport (8) à la position de départ (26) ;
- Transport du support de charge (9) avec le véhicule de transport (8) le long d'un itinéraire défini par l'ordre de transport (33) jusqu'à la position cible (27) en détectant et en évaluant les balises de navigation (19) sur l'unité de commande (39) du véhicule de transport respectif (8) ;
- Transfert du support de charge (9) vers la position cible (27) ;
**caractérisé en ce que**
- le véhicule de transport (8) est commandé par l'unité de commande (39),
- le véhicule de transport (8) se déplace le long du trajet dans une première section de déplacement (12) à une première vitesse de déplacement maximale et dans une deuxième section de déplacement (13) à une deuxième vitesse de déplacement maximale, la deuxième vitesse de déplacement maximale étant supérieure à la première vitesse de déplacement maximale,
- la deuxième section de déplacement (13) étant délimitée par rapport à la première section de déplacement (12) par une délimitation (14) qui peut être franchie par les véhicules de transport (8) au niveau d'au moins une zone de passage prédéterminée (17), et
- lorsque la personne (15) pénètre de la première section de déplacement (12) vers la seconde section de déplacement (13) en franchissant la délimitation (14), la seconde vitesse de déplacement maximale est réglée pour être égale à la première vitesse de déplacement maximale.

17. Procédé pour transporter des supports de charge et pour exécuter manuellement des ordres de traitement selon la revendication 16, **caractérisé en ce que** dans une étape de configuration, au moins une zone de déplacement (5) et/ou au moins une zone de travail (6) à l'intérieur de l'espace d'action (4) sont définies, notamment par l'attribution des balises de navigation (19) à au moins une zone de déplacement (5) et/ou à au moins une zone de travail (6).
